# EUROPEAN PATENT APPLICATION

(11) **EP 4 422 337 A1**
(43) Date of publication of application: **28.08.2024**
(21) Application number: 22882939.6
(22) Date of filing: 20.10.2022
(51) Int. Cl.: H04W 76/15

(54) **COMMUNICATION METHOD, AND DEVICE AND STORAGE MEDIUM**

(30) Priority: 22.10.2021 CN 202111233512
(71) Applicant: ZTE Corporation, Shenzhen, Guangdong 518057 (CN)
(72) Inventor: NIU, Li, Shenzhen, Guangdong 518057 (CN); DAI, Bo, Shenzhen, Guangdong 518057 (CN); SHA, Xiubin, Shenzhen, Guangdong 518057 (CN); LU, Ting, Shenzhen, Guangdong 518057 (CN)
(74) Representative: Iannone, Carlo Luigi
(86) International application number: PCT/CN2022/126398
(87) International publication number: WO 2023/066334

(57) **Abstract**

Provided are a communication method, a device, and a storage medium. The communication method applied to a first communication node includes sending a terminal aggregator communication, TAC, establishment request message to a second communication node; receiving a TAC establishment response message corresponding to the TAC establishment request message and fed back by the second communication node; sending a TAC establishment confirmation message carrying a TAC establishment result and corresponding to the TAC establishment response message to the second communication node.

## Description

### TECHNICAL FIELD

The present application relates to the field of communication, for example, a communication method, a device, and a storage medium.

### BACKGROUND

With the popularization of wireless communication technology, multiple terminals may exist in a certain area. For example, within the coverage of a base station, many terminals are distributed, including terminals that are close to the base station and terminals that are far from the base station. Terminals that are closer to the base station receive the base station signals with better channel quality than terminals that are farther from the base station. Alternatively, some terminals, blocked by obstacles, receives base station signals with poor channel quality. To improve the reliability of data transmission, terminals with good channel quality may help terminals with poor channel quality send data packets. However, to achieve data transmission between two terminals, how to communicate between the two base stations is an urgent problem to be resolved.

### SUMMARY

Embodiments of the present application provide a communication method. The communication method is applied to a first communication node and includes the following.

A terminal aggregator communication (TAC) establishment request message is sent to a second communication node.

A TAC establishment response message corresponding to the TAC establishment request message and fed back by the second communication node is received.

A TAC establishment confirmation message carrying a TAC establishment result and corresponding to the TAC establishment response message is sent to the second communication node.

Embodiments of the present application provide a communication method. The communication method is applied to a second communication node and includes the following.

A TAC establishment request message sent by the first communication node is received.

A TAC establishment response message corresponding to the TAC establishment request message is fed back to the first communication node.

A TAC establishment confirmation message carrying a TAC establishment result and corresponding to the TAC establishment response message and sent by the first communication node is received.

Embodiments of the present application provide a communication device. The device includes a memory and one or more processors.

The memory is configured to store one or more programs.

When executed by the one or more processors, the one or more programs cause the one or more processors to perform the method of any one of the preceding embodiments.

Embodiments of the present application provide a storage medium. The storage medium stores a computer program which, when executed by a processor, performs the method of any one of the preceding embodiments.

### BRIEF DESCRIPTION OF DRAWINGS

FIG. 1 is a diagram illustrating the communication between a terminal and a base station provided by related technologies.
FIG. 2 is a flowchart of a communication method according to an embodiment of the present application.
FIG. 3 is a flowchart of another communication method according to an embodiment of the present application.
FIG. 4 is a diagram illustrating the interaction of TAC establishment according to an embodiment of the present application.
FIG. 5 is a diagram illustrating the interaction of another TAC establishment according to an embodiment of the present application.
FIG. 6 is a diagram illustrating the interaction of TAC release according to an embodiment of the present application.
FIG. 7 is a diagram illustrating the interaction of another TAC release according to an embodiment of the present application.
FIG. 8 is a diagram illustrating the interaction of TAC establishment rejection according to an embodiment of the present application.
FIG. 9 is a diagram illustrating the interaction of another TAC release according to an embodiment of the present application.
FIG. 10 is a diagram illustrating the interaction of base station switching according to an embodiment of the present application.
FIG. 11 is a diagram illustrating the interaction of another base station switching according to an embodiment of the present application.
FIG. 12 is a diagram illustrating the interaction of a connection establishment request message according to an embodiment of the present application.
FIG. 13 is a diagram illustrating the interaction of terminal information according to an embodiment of the present application.
FIG. 14 is a diagram illustrating the interaction of TAC configuration information according to an embodiment of the present application.
FIG. 15 is a diagram illustrating the interaction of a communication request message according to an embodiment of the present application.
FIG. 16 is a block diagram of a communication apparatus according to an embodiment of the present application.
FIG. 17 is a block diagram of another communication apparatus according to an embodiment of the present application.
FIG. 18 is a diagram illustrating the structure of a communication device according to an embodiment of the present application.

### DETAILED DESCRIPTION

Embodiments of the present application are described below in conjunction with drawings.

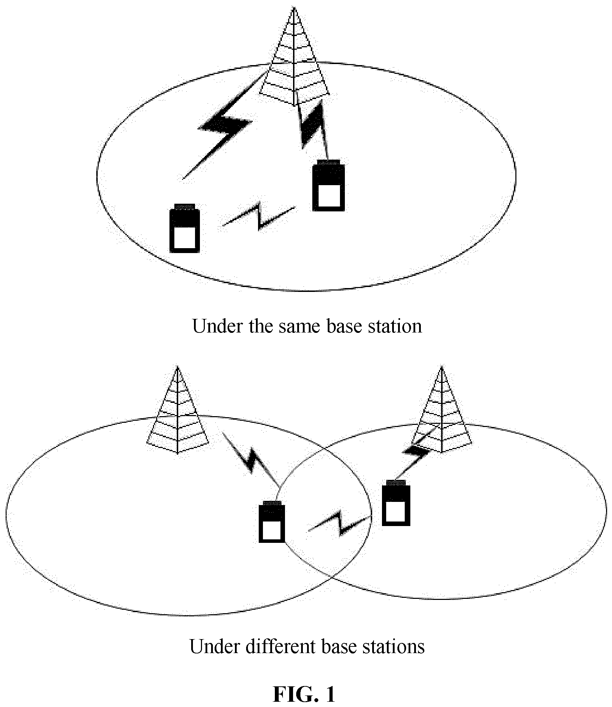

To improve the reliability of data transmission, terminals with good channel quality may help terminals with poor channel quality send data packets. In this manner, a data packet may be sent to the base station through a terminal with good channel quality or a terminal with poor channel quality. The base station receives two copies of the same data packet, which greatly increases the reliability. Alternatively, in order to increase the data transmission rate, terminals with good channel quality may help terminals with poor channel quality send data packets. In this manner, an uplink data packet may be sent to the base station through a terminal with good channel quality or through a terminal with poor channel quality. The base station receives data packets from multiple terminals separately, and the number of received data packets and the transmission rate increase greatly. For example, terminal 1 is located at the center of the base station, and the channel quality of the terminal 1 is good. Terminal 2 is located at the edge of the base station or is blocked by an obstacle, and the channel quality of the terminal 2 is poor. The terminal 1 and the terminal 2 separately establish a connection with the base station. In addition, a connection is established between the terminal 1 and the terminal 2, which may be a wired connection or a wireless connection, such as a WiFi connection or a sidelink connection. After generating a data packet, the terminal 2 forwards the data packet to the terminal 1. The terminal 1 may assist terminal 2 and forward the data packet of the terminal 2 to the base station. Both the terminal 1 and the terminal 2 send the data packet to the base station so that the base station separately receives the data packet from the terminal 1 and the terminal 2. FIG. 1 is a diagram illustrating the communication between a terminal and a base station provided by related technologies. As shown in FIG. 1, two terminals may be under the same base station, or two terminals may be under different base stations, that is, the base stations to which each terminal is connected are different.

For a downlink data packet, the base station may send the data packet to a terminal with good channel quality, and the terminal with good channel quality forwards the data packet to a terminal with poor channel quality, or the base station may directly send the data packet to the terminal with poor channel quality. The terminal with poor channel quality receives data packets from the base station and another terminal separately. In this manner, the reliability, the number, and the transmission rate of the received data packets greatly increase.

Under the base station, multiple terminals establish connections with the base station, and connections are established between multiple terminals. A data packet of one terminal is forwarded by another terminal. This transmission method may be referred to as terminal aggregator communication (TAC). It should be noted that the terminal aggregator communication may also be referred to as terminal aggregator transmission.

Multiple terminal aggregator transmissions may be repeated transmissions, that is, multiple terminals transmit the same data packet over an air interface; alternatively, different data packets may be sent by multiple terminals separately, that is, multiple terminals transmit different data packets over the air interface.

In a terminal aggregator transmission solution, a terminal that generates a data packet or a destination terminal to which the data packet is finally submitted is referred to as anchor user equipment (anchor UE), while a terminal that assists in the transmission is referred to as non-anchor user equipment (non anchor UE). In the case where anchor UE and non anchor UE access different base stations, the base station accessed by the anchor UE is referred to as the anchor base station, and the base station accessed by the non anchor UE is referred to as the non anchor base station.

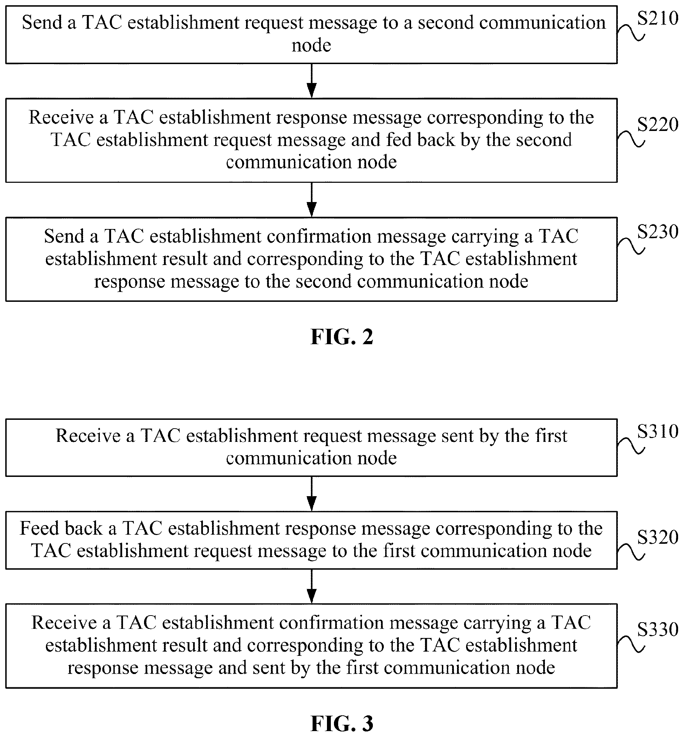

In an embodiment, FIG. 2 is a flowchart of a communication method according to an embodiment of the present application. This embodiment may be executed by a communication device. The communication device may be a first communication node. Illustratively, the first communication node may be a local base station. For example, the local base station may be an anchor base station (denoted as an anchor next generation NodeB (anchor gNB)). As shown in FIG. 2, this embodiment includes S210 to S230.

In S210, a TAC establishment request message is sent to a second communication node.

The second communication node refers to an opposite-end base station that establishes a communication connection with the first communication node. It can be understood that in the case where the first communication node initiates a TAC establishment process, the first communication node is a local base station, and correspondingly, the second communication node is an opposite-end base station. Certainly, in the case where the second communication node initiates a TAC establishment process, the second communication node may be used as a local base station, and correspondingly, the first communication node is an opposite-end base station. In the embodiment of the present application, an example is used where the first communication node initiates a TAC establishment process to describe the interaction between the first communication node and the second communication node. It can be understood that the first communication node is a local base station, and the second communication node is an opposite-end base station. In an embodiment, the local base station may be an anchor gNB or a non anchor gNB; correspondingly, the opposite-end base station may be an anchor gNB or a non anchor gNB. In an embodiment, in the case where the local base station is an anchor gNB, the opposite-end base station may be a non anchor gNB. In an embodiment, in the case where the local base station is a non anchor gNB, the opposite-end base station may be an anchor gNB.

In an embodiment, when the anchor gNB serving as the first communication node determines to initiate the terminal aggregator transmission between base stations, the anchor gNB selects a non anchor gNB according to the location of the non anchor UE and initiates the TAC establishment request message through the communication interface between the base stations. The communication interface between base stations may include an XN interface and an X2 interface.

In S220, a TAC establishment response message corresponding to the TAC establishment request message and fed back by the second communication node is received.

In an embodiment, when the second communication node determines to accept the terminal aggregator transmission between base stations, the second communication node feeds back the TAC establishment response message to the first communication node through a communication interface between the base stations. The communication interface between base stations may include an XN interface and an X2 interface.

In S230, a TAC establishment confirmation message carrying a TAC establishment result and corresponding to the TAC establishment response message is sent to the second communication node.

In an embodiment, after the first communication node receives the TAC response message fed back by the second communication node, the terminal aggregator transmission between base stations is established between the first communication node and the second communication node, and the corresponding TAC establishment result is obtained. The first communication node sends the TAC establishment confirmation message that carries the TAC establishment result to the second communication node so that the second communication node promptly learns the establishment result of the terminal aggregator transmission between the second communication node and the first communication node, thereby achieving the terminal aggregator transmission between the base stations.

In an embodiment, the TAC establishment request message includes at least one of the following: a first TAC indication configured to indicate that a TAC is expected to be performed, a first terminal identifier and a second terminal identifier, a TAC support state of a second terminal, a service identifier indicating that a TAC is expected to be performed, the TAC support capability of a second terminal, or connection configuration information between the second communication node and the first communication node. In an embodiment, the first TAC indication is configured to indicate that the first communication node expects to perform terminal aggregator transmission. The first terminal identifier refers to an identifier of a terminal that accesses the first communication node, for example, the first terminal identifier may be an identifier of anchor UE. The second terminal identifier refers to an identifier of a terminal that accesses the second communication node, for example, the second terminal identifier may be an identifier of non anchor UE. The service identifier indicating that a TAC is expected to be performed refers to the service identifier indicating that terminal aggregator transmission is expected to be performed. The TAC support capability of the second terminal refers to the capability of a terminal that accesses the second communication node to support the terminal aggregator transmission. The connection configuration information between the second communication node and the first communication node refers to connection configuration information between a non anchor gNB and an anchor gNB and is used for data packet fronthaul of the terminal aggregator transmission, for example, the connection configuration information includes transmission information of uplink and downlink data fronthaul.

In an embodiment, the TAC establishment response message includes at least one of the following: a second TAC indication configured to indicate that a TAC is performed, first interface configuration information of the second communication node for a second terminal, or second interface configuration information of the second communication node for a second terminal. In embodiments, the second TAC indication is configured to indicate that the second communication node determines to perform the terminal aggregator transmission. In embodiments, the first interface refers to a communication interface for establishing a connection between a base station and a terminal. For example, the first interface may be a Uu interface. The second interface refers to a communication interface for establishing a connection between terminals. For example, the second interface may be a PC5 interface. It can be understood that the second interface is an interface corresponding to the establishment of sidelink communication. In embodiments, the first interface configuration information of the second communication node for the second terminal refers to the configuration information of the second communication node for the second terminal on the first interface. For example, the first interface configuration information may include a data radio bearer (DRB) configuration, a radio network temporary identifier (RNTI), and a physical random access channel (PRACH) resource. In embodiments, the second interface configuration information of the second communication node for the second terminal refers to the configuration information of the second communication for the second terminal on the second interface. For example, the second interface configuration information may include a DRB configuration, a logical channel configuration, a SideLink DRB or logical channel of the second terminal supporting the terminal aggregator transmission, and a binding relationship between the second terminal and the first interface DRB or logical channel of the second communication node.

In an embodiment, the TAC establishment confirmation message includes at least one of the following: first interface establishment success indication information of a first terminal, second interface establishment success indication information of a first terminal, first interface establishment success indication information of a second terminal, second interface establishment success indication information of a second terminal, a confirmation message fed back by a first terminal to the first communication node, a confirmation message fed back by a second terminal to the first communication node, or a confirmation message fed back by a second terminal to a first terminal. Illustratively, the first terminal is a non anchor UE, the second terminal is an anchor UE, the first interface is a Uu interface, and the second interface is an interface corresponding to SideLink communication. In embodiments, the establishment success indication information refers to indication information indicating that the terminal aggregator transmission is successfully established.

In an embodiment, before sending the TAC establishment request message to the second communication node, the communication method applied to the first communication node also includes receiving a TAC indication message sent by the second communication node, where the TAC indication message is configured to indicate that a second terminal under the second communication node expects to perform a TAC. In embodiments, when the second communication node discovers that a terminal access thereto may assist in transmission, the second communication node may proactively notify the first terminal so that terminal aggregator transmission is established between the first communication node accessed by the first terminal and the second communication node. In embodiments, the second communication node indicates to the first communication node a message indicating that the terminal aggregator transmission is expected to be performed, that is, the second communication node sends a TAC indication message. After receiving the TAC indication message, the first communication node may send the TAC establishment request message to the second communication node and then receive the TAC establishment response message corresponding to the TAC establishment request message and fed back by the second communication node. Then, the first communication node sends the TAC establishment confirmation message corresponding to the TAC establishment response message and carrying the TAC establishment result to the second communication node.

In an embodiment, the TAC indication message includes at least one of the following: a second terminal identifier, a TAC support state of the second terminal, a first terminal identifier, a downlink signal measurement result of the second terminal for the second communication node, a measurement result of the second terminal for a sidelink signal, or an estimated air interface rate of the second terminal based on the TAC. In embodiments, the estimated air interface rate refers to the expected air interface rate of the second terminal based on terminal aggregator transmission. It can be understood that the second terminal performs the terminal aggregator transmission only when the estimated air interface rate is met.

In an embodiment, after sending the TAC establishment request message to the second communication node, the communication method applied to the first communication node also includes receiving a TAC establishment rejection message corresponding to the TAC establishment request message and fed back by the second communication node, where the TAC establishment rejection message includes a reject reason. In embodiments, both the first communication node and the second communication node may initiate a process of the terminal aggregator transmission. In addition, in the case where the first communication node is used as a local base station, the second communication node is an opposite-end base station, and both the first communication node and the second communication node may be anchor base stations or non anchor base stations. However, in the case where the first communication node is an anchor base station, the second communication node is a non anchor base station. Correspondingly, in the case where the first communication node is a non anchor base station, the second communication node is an anchor base station. In embodiments, in the case where the first communication node serving as the local base station sends the TAC establishment request message to the second communication node serving as the opposite-end base station, the second communication node may feed back the TAC establishment rejection message to the first communication node. The TAC establishment rejection message may include the rejection reason. Illustratively, the rejection reason may be that the channel quality of the second communication node is poor, the load is heavy, the SideLink channel is poor, or a terminal cannot be found.

In an embodiment, the communication method applied to the first communication node also includes sending a TAC release request message to the second communication node and receiving at least one of a TAC release response message corresponding to the TAC release request message and fed back by the second communication node or a TAC release confirmation message carrying a TAC release result and fed back by the second communication node. In embodiments, a terminal that performs terminal aggregator transmission may end the terminal aggregator transmission due to service completion, channel quality improvement, or the like. That is, the first communication node may initiate a request to end the terminal aggregator transmission to the second communication node. The TAC release request message may refer to a request message to end the terminal aggregator transmission. In embodiments, the first communication node serving as the local base station sends the TAC release request message to the second communication node serving as the opposite-end base station, so as to request to end the terminal aggregator transmission. In the case where the second communication node confirms the end of the terminal aggregator transmission, the second communication node feeds back the TAC release response message or the TAC release confirmation message to the first communication node.

In an embodiment, the first communication node is configured to generate a data packet, and the second communication node is configured to forward the data packet generated by the first communication node to a third communication node. In embodiments, because the first communication node is configured to generate a data packet, the first communication node is an anchor base station; because the second communication node is configured to forward the data packet generated by the first communication node to the third communication node, the second communication node is a non anchor base station.

In an embodiment, the first communication node is configured to forward a data packet generated by the second communication node to a third communication node, and the second communication node is configured to generate the data packet. In embodiments, because the first communication node is configured to forward the data packet generated by the second communication node to the third communication node, the first communication node is a non anchor base station because the second communication node is configured to generate the data packet, the second communication node is an anchor base station.

In an embodiment, the TAC release request message includes at least one of the following: a TAC release reason, a released service identifier, a released terminal identifier, an identifier of a released first terminal or a released second terminal on a first interface, an identifier of a released first terminal or a released second terminal on a second interface, or connection configuration information between a released first communication node and a released second communication node. The explanation of the first interface and the second interface may be found in the description of the proceeding embodiments and is not repeated herein.

In an embodiment, the TAC release response message includes at least one of the following: a released service identifier, an identifier of a released second communication node for a second terminal on a first interface, an identifier of a released second communication node for a second terminal on a second interface, or connection configuration information between a released first communication node and a released second communication node.

In an embodiment, the TAC release confirmation message includes at least one of the following: release success indication information of a first terminal on a first interface, release success indication information of a first terminal on a second interface, release success indication information of a second terminal on a first interface, release success indication information of a second terminal on a second interface, a confirmation message fed back by a first terminal to the first communication node, a confirmation message fed back by a second terminal to a first terminal, or a confirmation message fed back by a second terminal to the first communication node.

In embodiments of the present application, the explanation of the first interface and the second interface may be found in the description of the proceeding embodiments and is not repeated herein.

In an embodiment, a first terminal and a second terminal access the first communication node, and the first terminal switches from the first communication node to the second communication node; the communication method applied to the first communication node also includes receiving a downlink signal measurement result reported by the first terminal, sending a first switching request message to the second communication node according to the downlink signal measurement result and a current operating parameter, and receiving a first switching confirmation message corresponding to the first switching request message and fed back by the second communication node. In embodiments, the first communication node may be a source base station, and the second communication node is a target base station. The current operating parameter refers to attribute information of the first communication node. For example, the current operating parameter includes system load. In embodiments, the first terminal reports a measurement result (that is, the downlink signal measurement result) obtained by measuring the downlink signal of the first communication node accessed by the first terminal and determines to initiate switching based on the downlink signal measurement result and the system load of the first terminal, that is, the first terminal sends the first switching request message to the second communication node. In the case where the second communication node determines to accept the switching based on its own measurement result and system load, the second communication node feeds back the first switching confirmation message to the first communication node so that the first terminal switches from the first communication node to the second communication node.

In an embodiment, the first switching request message includes at least one of the following: a TAC identifier bit, a terminal identifier, connection configuration information between the first communication node and the second communication node, configuration information of the first communication node for a second interface, configuration information of the first communication node for the second terminal, or configuration information of the first communication node for the first terminal.

In an embodiment, the first switching confirmation message includes at least one of the following: configuration information of the second communication node for a terminal on a first interface, configuration information of the second communication node for a terminal on a second interface, connection configuration information between the first communication node and the second communication node, a data radio bearer (DRB) of a TAC the second communication node supports or a protocol data unit (PDU) session of a TAC the second communication node supports, or a connection binding relationship between the first communication node and the second communication node.

In an embodiment, a first terminal and a second terminal access the first communication node, and the first terminal and the second terminal switch from the first communication node to the second communication node simultaneously; the communication method applied to the first communication node also includes receiving a downlink signal measurement result reported by the first terminal and/or the second terminal, sending a second switching request message to the second communication node according to the downlink signal measurement result and a current operating parameter, and receiving a second switching confirmation message corresponding to the second switching request message and fed back by the second communication node. In embodiments, the first communication node may be a source base station, and the second communication node is a target base station. The current operating parameter refers to attribute information of the first communication node. For example, the current operating parameter includes system load. In embodiments, the first terminal and the second terminal simultaneously report a measurement result (that is, the downlink signal measurement result) obtained by measuring the downlink signal of the first communication node accessed by the first terminal and the second terminal and determine to initiate switching based on the downlink signal measurement results and the system load of the first terminal and the second terminal, that is, the first terminal and the second terminal send the first switching request message to the second communication node. In the case where the second communication node determines to accept the switching based on its own measurement result and system load, the second communication node feeds back the first switching confirmation message to the first communication node so that the first terminal and the second terminal switch from the first communication node to the second communication node simultaneously.

In an embodiment, the second switching confirmation message includes at least one of the following: configuration information of the second communication node for the first terminal on a second interface, configuration information of the second communication node for the second terminal on a second interface, configuration information of the second communication node for the first terminal on a first interface, or configuration information of the second communication node for the second terminal on a first interface.

In an embodiment, after being encapsulated into a container, a parameter carried and transmitted by the TAC establishment response message includes at least one of the following: first interface configuration information of the second communication node for a second terminal, second interface configuration information of the second communication node for a second terminal, a confirmation message fed back by a first terminal to the first communication node, a confirmation message fed back by a second terminal to the first communication node, a confirmation message fed back by a second terminal to a first terminal, an identifier of a released second communication node for a second terminal on a first interface, an identifier of a released second communication node for a second terminal on a second interface, connection configuration information between a released first communication node and a released second communication node, configuration information of the first communication node for a second interface, configuration information of the first communication node for a second terminal, configuration information of the first communication node for a first terminal, configuration information of the second communication node for a first terminal on a second interface, configuration information of the second communication node for a second terminal on a second interface, configuration information of the second communication node for a first terminal on a first interface, or configuration information of the second communication node for a second terminal on a first interface.

In an embodiment, the communication method applied to the first communication node also includes sending a system information block (SIB) to a third communication node. where the SIB includes one of the following: indication information that a cell supports a TAC, indication information that a cell supports a TAC between base stations, or indication information that a cell supports a TAC within a base station. In embodiments, a terminal may send, to the accessed base station, a message indicating the terminal's ability to support terminal aggregator transmission or the terminal's expectation to perform terminal aggregator transmission. In embodiments, in order to facilitate a terminal to determine whether the accessed base station supports terminal aggregator, the base station may broadcast its ability to support the terminal aggregator in the SIB.

In an embodiment, before sending the TAC establishment request message to the second communication node, the communication method applied to the first communication node also includes receiving a connection establishment request message sent by a fourth communication node. The connection establishment request message includes at least one of the following: a terminal that supports a TAC, an identifier of a cell in which a terminal supporting a TAC is located, or a base station identifier corresponding to a terminal that supports a TAC. In embodiments, the fourth communication node refers to the core network. In embodiments, in order to support the terminal aggregator transmission, the fourth communication node may notify, in the process of service establishment or terminal connection establishment, whether the third communication node accessed by the first communication node or the second communication node supports terminal aggregator transmission so that the first communication node and/or the second communication node configure the terminal aggregator transmission for the third communication node. In embodiments, the fourth communication node may notify the first communication node and/or the second communication node of relevant information of the third communication node that may perform terminal aggregator transmission through the connection establishment request message.

In an embodiment, before sending the TAC establishment request message to the second communication node, the method also includes receiving terminal information sent by a third communication node, where the terminal information includes at least one of the following: indication information indicating that a TAC is expected to be performed, an identifier of a cell or a base station accessed by another third communication node, or a TAC support state of a cell accessed by another third communication node. In embodiments, the another third communication node refers to a terminal that may assist the third communication node in data transmission. In embodiments, the third communication node may initiate the establishment of a connection with another third communication node. If the third communication node supports terminal aggregator transmission, information of another third communication node may be sent to the accessed first communication node or second communication node.

In an embodiment, the communication method applied to the first communication node also includes sending TAC configuration information to another third communication node, where the TAC configuration information includes one of the following: an identifier of a cell accessed by the another third communication node or an identifier of a base station accessed by the another third communication node. In embodiments, in the case where the first communication node determines that a service of a third communication node under the first communication node is provided by another third communication node for terminal aggregator transmission, the first communication node may provide, for the another third communication node, an identifier of a cell accessed by the another third communication node and/or an identifier of a base station accessed by the another third communication node.

In an embodiment, the third communication node receives a communication feedback message corresponding to a communication request message and fed back by the another third communication node, and both the communication request message and the communication feedback message include at least one of the following: a cell identifier or a base station identifier corresponding to the third communication node, or a TAC support state of a cell accessed by the another third communication node. In embodiments, in the case where the third communication node is a first terminal under the first communication node, the another third communication node is a second terminal under the second communication node. In embodiments, in the case where the first communication node and the second communication node successfully establish terminal aggregator transmission, the first terminal and the second terminal may establish a connection and indicate that the connection is a terminal connection based on terminal aggregator, that is, the first terminal may send a communication request message to the second terminal, so as to establish the terminal aggregator transmission; in the case where the second terminal accepts the establishment of the terminal aggregator transmission, the second terminal sends a communication feedback message to the first terminal so that the first terminal learns, in a timely manner, the serving cell or the base station accessed by the second terminal.

In an embodiment, FIG. 3 is a flowchart of another communication method according to an embodiment of the present application. This embodiment may be executed by a communication device. The communication device may be a second communication node. Illustratively, the second communication node may be an opposite-end base station. For example, the opposite-end base station may be a non-anchor base station (denoted as non anchor gNB). As shown in FIG. 3, this embodiment includes S310 to S330.

In S310, a TAC establishment request message sent by the first communication node is received.

In S320, a TAC establishment response message corresponding to the TAC establishment request message is fed back to the first communication node.

In S330, a TAC establishment confirmation message carrying a TAC establishment result and corresponding to the TAC establishment response message and sent by the first communication node is received.

In an embodiment, after receiving the TAC establishment request message sent by the first communication node, the method also includes feeding back a TAC establishment rejection message corresponding to the TAC establishment request message to the first communication node, where the TAC establishment rejection message includes a reject reason.

In an embodiment, the communication method applied to the second communication node also includes receiving a TAC release request message sent by the first communication node, and feeding back to the first communication node a TAC release response message corresponding to the TAC release request message and/or a TAC release confirmation message carrying a TAC release result.

In an embodiment, a first terminal and a second terminal access the first communication node, and the first terminal switches from the first communication node to the second communication node; the communication method applied to the second communication node also includes receiving a first switching request message sent by the first communication node, and feeding back a first switching confirmation message corresponding to the first switching request message to the first communication node.

In an embodiment, a first terminal and a second terminal access the first communication node, and the first terminal and the second terminal switch from the first communication node to the second communication node simultaneously; the communication method applied to the second communication node also includes receiving a second switching request message sent by the first communication node, and feeding back a second switching confirmation message corresponding to the second switching request message to the first communication node.

In an embodiment, the communication method applied to the second communication node also includes sending a system information block (SIB) to a third communication node, where the SIB includes one of the following: indication information that a cell supports a TAC: indication information that a cell supports a TAC between base stations, or indication information that a cell supports a TAC within a base station.

In an embodiment, before receiving the TAC establishment request message sent by the first communication node, the method also includes receiving a connection establishment request message sent by a fourth communication node, where the connection establishment request message includes at least one of the following: a terminal that supports a TAC, an identifier of a cell in which a terminal supporting a TAC is located, or a base station identifier corresponding to a terminal that supports a TAC.

In an embodiment, before receiving the TAC establishment request message sent by the first communication node, the method also includes receiving terminal information sent by a third communication node, where the terminal information includes at least one of the following: indication information indicating that a TAC is expected to be performed, an identifier of a cell or a base station accessed by another third communication node, or a TAC support state of a cell accessed by another third communication node.

In an embodiment, the communication method applied to the second communication node also includes sending TAC configuration information to another third communication node, where the TAC configuration information includes one of the following: an identifier of a cell accessed by the another third communication node or an identifier of a base station accessed by the another third communication node.

In an embodiment, the third communication node receives a communication feedback message corresponding to a communication request message and fed back by the another third communication node, and both the communication request message and the communication feedback message include at least one of the following: a cell identifier or a base station identifier corresponding to the third communication node, or a TAC support state of a cell accessed by the another third communication node.

It should be noted here that for the explanation of each parameter in the communication method applied to the second communication node, reference may be made to the corresponding description in the preceding communication method applied to the first communication node, and thus the explanation is not repeated herein.

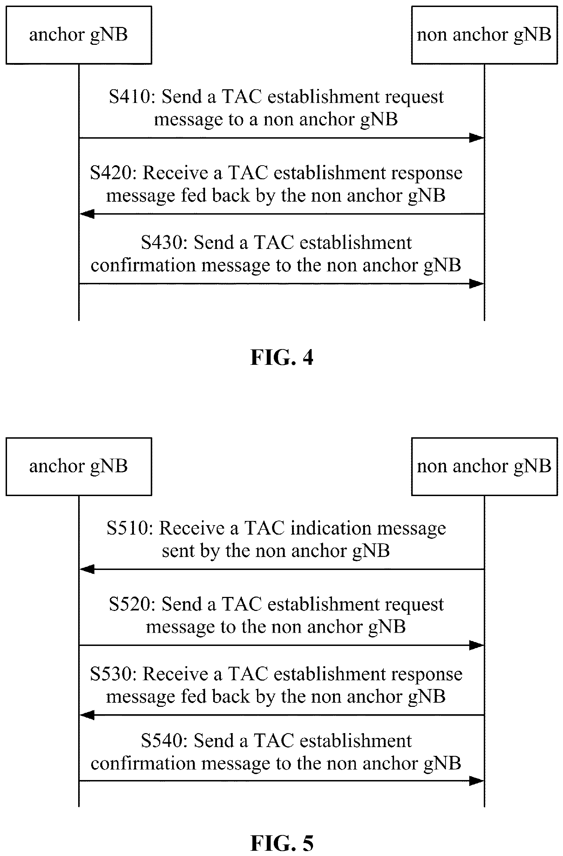

In an embodiment, an example is used where the first communication node is an anchor base station (denoted as an anchor gNB), the second communication node is a non anchor base station (denoted as a non anchor gNB), the first terminal is an anchor UE (access the anchor gNB), and the second terminal is a non anchor UE (access the non anchor gNB), by which the TAC establishment process between the first communication node and the second communication node is explained. FIG. 4 is a diagram illustrating the interaction of TAC establishment according to an embodiment of the present application. This embodiment uses an example where the anchor base station initiates the TAC establishment process to explain the interactive process of TAC establishment. As shown in FIG. 4, this embodiment includes S410 to S430.

In S410, a TAC establishment request message is sent to a non anchor gNB.

In embodiments, an anchor base station decides to initiate terminal aggregator transmission between base stations. The anchor base station selects a non anchor base station according to the location of a non anchor UE and initiates the TAC establishment request message on an XN or X2 interface. For example, the TAC establishment request message may be S-NODE ADDITION REQUEST, S-NODE MODIFICATION REQUEST, or another message.

The TAC establishment request message carries at least one of the following: a terminal aggregator transmission indication (that is, the first TAC indication configured to indicate that a TAC is expected to be performed in the preceding embodiments), a UE identifier (that is, the first terminal identifier and the second terminal identifier in the preceding embodiments), a service identifier indicating that a TAC is expected to be expected, configuration of SideLink by the anchor base station, a TAC support capability of the second terminal, connection configuration information between the second communication node and the first communication node, or a connection binding relationship between the DRB/PDU session of the anchor base station supporting the terminal aggregator transmission and the connection between the non anchor base station and the anchor base station. The terminal aggregator transmission indication indicates that the terminal aggregator transmission is expected and the UE is authorized to perform the terminal aggregator transmission. The UE identifier includes identifiers of the anchor UE and the non anchor UE, such as S-Temporary Mobile Subscription Identifiers (S-TMSIs), target identifiers, original identifiers, and an RNTI of the anchor UE and the non anchor UE. The service identifier indicating that a TAC is expected to be expected refers to a established service identifier or a service identifier indicating that terminal aggregator transmission is expected, such as a DRB identifier and a PDU session identifier. The configuration of SideLink by the anchor base station includes a logical channel identifier and a DRB identifier of the sidelink supporting the terminal aggregator transmission, a binding relationship between a sidelink DRB/logical channel of the anchor UE supporting the terminal aggregator transmission and Uu interface DRB/logical channel of the anchor UE and the anchor base station. The TAC support capability of the second terminal refers to the capability of the non anchor UE to support the terminal aggregator transmission. The connection configuration information between the second communication node and the first communication node refers to the connection configuration information between the non anchor base station and the anchor base station and is used for the data packet fronthaul of the terminal aggregator transmission, where the connection configuration information between the second communication node and the first communication node includes transmission information for uplink and downlink data fronthaul, such as a General Packet Radio Service (GPRS) Tunneling Protocol for the User plane (GTPU) identifier and a transport layer address.

In S420, a TAC establishment response message fed back by the non anchor gNB is received.

In embodiments, the non anchor base station decides to accept the terminal aggregator transmission between base stations and initiates a terminal aggregator request response on the XN or X2 interface, that is, the non anchor base station feeds back the TAC establishment response message. For example, the TAC establishment response message may be an S-NODE ADDITION REQUEST ACKNOWLEDGE, an S-NODE MODIFICATION REQUEST ACKNOWLEDGE, or another message.

The TAC establishment response message carries one of the following: a terminal aggregator transmission indication (that is, the second TAC indication configured to indicate that a TAC is performed in the preceding embodiments), a service identifier indicating successful establishment or a service identifier for establishing terminal aggregator transmission, a failed service identifier and a failure reason/a service identifier of a failed terminal aggregator transmission and a failure reason, first interface configuration information of the second communication node for a second terminal, second interface configuration information of the second communication node for a second terminal, connection configuration information between the non anchor base station and the anchor base station, or a connection binding relationship between the DRB/PDU session of the non anchor base station supporting the terminal aggregator transmission and the connection between the non anchor base station and the anchor base station. The terminal aggregator transmission indication is configured to indicate the terminal aggregator transmission. The service identifier indicating successful establishment or the service identifier for establishing terminal aggregator transmission may be, for example, a DRB identifier and a PDU session identifier. The failed service identifier or the service identifier of the failed terminal aggregator transmission may be, for example, the DRB identifier and the PDU session identifier. The failure reason may be, for example, poor anchor UE channel quality, an overloaded base station, and sidelink configuration failure. The first interface configuration information of the second communication node for the second terminal refers to the configuration of the non anchor UE on the Uu interface by the non anchor base station and includes a DRB configuration, an RNTI, and a PRACH resource, where the information may be encapsulated as a container and carried by the TAC establishment response message. The second interface configuration information of the second communication node for the second terminal refers to the configuration of the non anchor UE on the SideLink by the non anchor base station and includes a DRB configuration, a logical channel configuration, a binding relationship between a sidelink DRB/logical channel of the non anchor UE supporting the terminal aggregator transmission and Uu interface DRB/logical channel of the non anchor UE and the non anchor base station, where the information may be encapsulated as a container and carried by the TAC establishment response message. The connection configuration information between the non anchor base station and the anchor base station is used for the data packet fronthaul of the terminal aggregator transmission and includes transmission information for uplink and downlink data fronthaul, such as a GTPU identifier and a transport layer address. For the connection binding relationship between the DRB/PDU session of the non anchor base station supporting the terminal aggregator transmission and the connection between the non anchor base station and the anchor base station, for example, the DRB/PDU session identifier and the GTPU identifier are bound.

One or more parameters in the TAC establishment response message may be encapsulated into a container and then transmitted.

In S430, a TAC establishment confirmation message is sent to the non anchor gNB.

In embodiments, the anchor base station feeds back a result of the terminal aggregator transmission to the non anchor base station and sends the TAC establishment confirmation message. For example, the TAC establishment confirmation message may be an S-NODE RECONFIGURATION COMPLETE, an S-NODE MODIFICATION CONFIRM, or another message.

The TAC establishment confirmation message carries one of the following: second interface establishment success indication information of a second terminal, second interface establishment success indication information of a first terminal, first interface establishment success indication information of a second terminal, first interface establishment success indication information of a first terminal, a confirmation message fed back by a first terminal to the first communication node, a confirmation message fed back by a second terminal to a first terminal, or a confirmation message fed back by a second terminal to the first communication node. The second interface establishment success indication information of a second terminal refers to the non anchor UE SideLink establishment success indication. The second interface establishment success indication information of a first terminal refers to the anchor UE SideLink establishment success indication. The first interface establishment success indication information of the second terminal refers to the non anchor UE Uu establishment success indication. The first interface establishment success indication information of the first terminal refers to the anchor UE Uu establishment success indication. The confirmation message fed back by the first terminal to the first communication node refers to the confirmation message fed back by the anchor UE to the anchor base station, for example, an RRCReconfigurationComplete message that may be encapsulated as a container and carried by the TAC establishment confirmation message. The confirmation message fed back by the second terminal to the first terminal refers to the confirmation message fed back by the non anchor UE to the anchor UE, for example, an RRCReconfigurationCompleteSidelink message that may be encapsulated as a container and carried by the TAC establishment confirmation message. The confirmation message fed back by the second terminal to the first communication node refers to the confirmation message fed back by the non anchor UE to the anchor base station, for example, an RRCReconfigurationComplete message that may be encapsulated as a container and carried by the TAC establishment confirmation message.

In an embodiment, an example is used where the first communication node is an anchor base station (denoted as an anchor gNB), the second communication node is a non anchor base station (denoted as a non anchor gNB), the first terminal is an anchor UE (access the anchor gNB), and the second terminal is a non anchor UE (access the non anchor gNB), by which the TAC establishment process between the first communication node and the second communication node is explained. FIG. 5 is a diagram illustrating the interaction of another TAC establishment according to an embodiment of the present application. This embodiment uses an example where the non anchor base station initiates the TAC establishment process to explain the interactive process of TAC establishment. As shown in FIG. 5, this embodiment includes S510 to S540.

In S510, a TAC indication message sent by the non anchor gNB is received.

In the case where the non anchor base station finds that the non anchor UE under the non anchor base station may assist in transmission, the non anchor base station may proactively notify the anchor gNB to request terminal aggregator transmission. The non anchor base station indicates to the anchor base station that the terminal aggregator transmission is expected, that is, the non anchor base station sends the TAC indication message. The TAC indication message may be an S-NODE MODIFICATION REQUIRED or another message.

In embodiments, the TAC indication message carries one of the following: a second terminal identifier, a TAC support state of the second terminal, a first terminal identifier, a downlink signal measurement result of the second terminal for the second communication node, a measurement result of the second terminal for a sidelink signal, or an estimated air interface rate of the second terminal based on the TAC. The second terminal identifier refers to an identifier of the non anchor UE, for example, an S-TMSI, a target identifier, and an RNTI. The TAC support state of the second terminal refers to the capability of the non anchor UE to support the terminal aggregator transmission, for example, terminal aggregator that supports a replication function and terminal aggregator that supports a distribution function. The first terminal identifier refers to an identifier of the anchor UE, for example, an S-TMSI, an original identifier, and an RNTI. The downlink signal measurement result of the second terminal for the second communication node refers to the measurement result of the non anchor UE measuring the downlink signal of the non-anchor base station, for example, reference signal receiving power (RSRP), reference signal receiving quality (RSRQ), and channel quality indicator (CQI). The measurement result of the second terminal for the sidelink signal refers to the measurement result of the non anchor UE measuring the SideLink signal, for example, RSRP, RSRQ, and CQI. The estimated air interface rate of the second terminal based on the TAC refers to the expected air interface rate of the non anchor UE based on the terminal aggregator transmission.

In S520, a TAC establishment request message is sent to the non anchor gNB.

In S530, a TAC establishment response message corresponding to the TAC establishment request message and fed back by the non anchor gNB is received.

In S540, a TAC establishment confirmation message carrying a TAC establishment result and corresponding to the TAC establishment response message is sent to the non anchor gNB.

It should be noted here that for an explanation of the S520 to S540, reference is made to the description of S410 to S430 in the preceding embodiments, and details are not repeated herein.

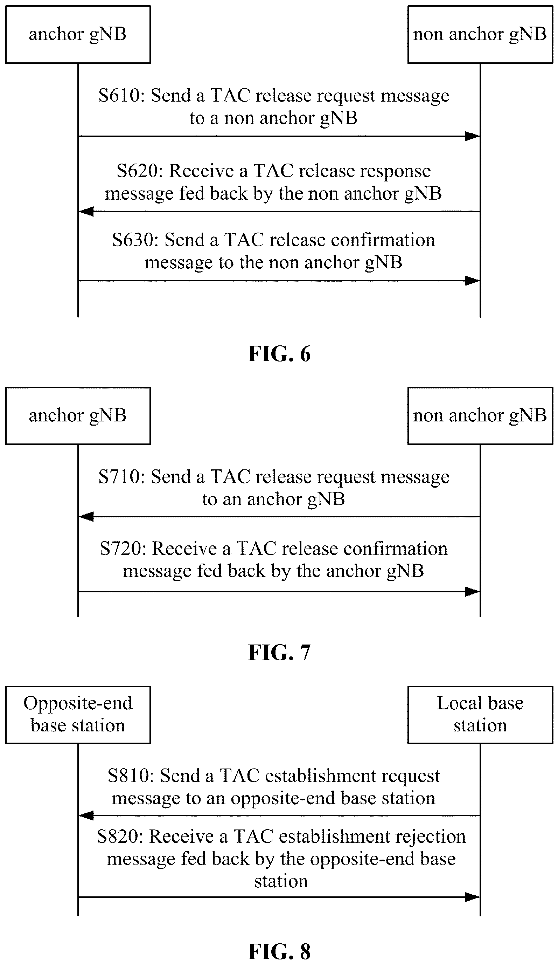

In an embodiment, an example is used where the first communication node is an anchor base station (denoted as an anchor gNB), the second communication node is a non anchor base station (denoted as a non anchor gNB), the first terminal is an anchor UE (access the anchor gNB), and the second terminal is a non anchor UE (access the non anchor gNB), by which the TAC establishment process between the first communication node and the second communication node is explained. FIG. 6 is a diagram illustrating the interaction of TAC release according to an embodiment of the present application. This embodiment uses an example where the anchor base station initiates the TAC release process to explain the interactive process of TAC release. As shown in FIG. 6, this embodiment includes S610 to S630.

In S610, a TAC release request message is sent to a non anchor gNB.

In embodiments, an anchor base station decides to release a terminal aggregator transmission between base stations and initiates the TAC release request message on the XN or X2 interface. For example, the TAC release request message may be an S-NODE MODIFICATION REQUEST or another message.

The TAC release request message carries one of the following: a terminal aggregator transmission release indication, a released service identifier, a TAC release reason, an identifier of the released first terminal on the first interface, an identifier of the released first terminal on the second interface, or connection configuration information between the released first communication node and second communication node. The terminal aggregator transmission release indication indicates that terminal aggregator transmission is expected to be released. The released service identifier may be, for example, a DRB identifier and a PDU session identifier. The TAC release reason may be that, for example, channel quality is improved, the load is light, the SideLink channel is improved, or data volume is not enough. The identifier of the released first terminal on the first interface refers to an identifier of the released anchor UE on the Uu interface and includes a DRB identifier and a logical channel identifier. The identifier of the released first terminal on the second interface refers to an identifier of the released anchor UE on the SideLink and includes a DRB identifier and a logical channel identifier. The connection configuration information between the released first communication node and second communication node refers to the connection configuration information between the released non anchor base station and anchor base station and includes transmission information for uplink and downlink data fronthaul, such as a GTPU identifier and a transport layer address.

In S620, a TAC release response message fed back by the non anchor gNB is received.

In embodiments, the non anchor base station decides to release the terminal aggregator transmission between the base stations and initiates the TAC release response message on the XN or X2 interface. The TAC release response message may be an S-NODE MODIFICATION REQUEST ACKNOWLEDGE or another message.

The TAC release response message carries one of the following: a released service identifier, an identifier of a released second communication node for a second terminal on a first interface, an identifier of a released second communication node for a second terminal on a second interface, or connection configuration information between the released first communication node and second communication node.

The released service identifier may be, for example, a DRB identifier and a PDU session identifier. The identifier of the released second communication node for the second terminal on the first interface refers to the identifier of the released non anchor base station for the non anchor UE on the Uu interface and includes a DRB identifier and a logical channel identifier, where the information may be encapsulated as a container and carried by the TAC release response message. The identifier of the released second communication node for the second terminal on the second interface refers to the identifier of the released non anchor base station for the non anchor UE on the SideLink and includes a DRB identifier and a logical channel identifier, where the information may be encapsulated as a container and carried by the TAC release response message. The connection configuration information between the released first communication node and second communication node refers to the connection configuration information between the released non anchor base station and anchor base station and includes transmission information for uplink and downlink data fronthaul, such as a GTPU identifier and a transport layer address.

One or more of the preceding parameters may be encapsulated into a container and transmitted.

In S630, a TAC release confirmation message is sent to the non anchor gNB.

In embodiments, the anchor base station feeds back a result of the terminal aggregator transmission to the non anchor base station and sends the TAC release confirmation message. For example, the TAC release confirmation message may be an S-NODE RECONFIGURATION COMPLETE, an S-NODE MODIFICATION CONFIRM, or another message.

The TAC release confirmation message carries one of the following: release success indication information of the second terminal on the second interface, release success indication information of the first terminal on the second interface, release success indication information of the second terminal on the first interface, release success indication information of the first terminal on the first interface, a confirmation message fed back by a first terminal to the first communication node, a confirmation message fed back by a second terminal to a first terminal, or a confirmation message fed back by a second terminal to the first communication node.

The release success indication information of the second terminal on the second interface refers to the non anchor UE SideLink release success indication. The release success indication information of the first terminal on the second interface refers to the anchor UE SideLink release success indication. The release success indication information of the second terminal on the first interface refers to the non anchor UE Uu release success indication. The release success indication information of the first terminal on the first interface refers to the anchor UE Uu release success indication. The confirmation message fed back by the first terminal to the first communication nod refers to the confirmation message fed back by the anchor UE to the anchor base station, for example, an RRCReconfigurationComplete message that may be encapsulated as a container and carried by the TAC release confirmation message. The confirmation message fed back by the second terminal to the first terminal refers to the confirmation message fed back by the non anchor UE to the anchor UE, for example, an RRCReconfigurationCompleteSidelink message that may be encapsulated as a container and carried by the TAC release confirmation message. The confirmation message fed back by the second terminal to the first communication node refers to the confirmation message fed back by the non anchor UE to the anchor base station, for example, an RRCReconfigurationComplete message that may be encapsulated as a container and carried by the TAC release confirmation message.

In an embodiment, an example is used where the first communication node is an anchor base station (denoted as an anchor gNB), the second communication node is a non anchor base station (denoted as a non anchor gNB), the first terminal is an anchor UE (access the anchor gNB), and the second terminal is a non anchor UE (access the non anchor gNB), by which the TAC establishment process between the first communication node and the second communication node is explained. FIG. 7 is a diagram illustrating the interaction of another TAC release according to an embodiment of the present application. This embodiment uses an example where the non anchor base station initiates the TAC release process to explain the interactive process of TAC release. As shown in FIG. 7, this embodiment includes S710 and S720.

In S710, a TAC release request message is sent to an anchor gNB.

In embodiments, the non anchor base station requests the anchor base station to release some of the services regarding the terminal aggregator transmission. The non anchor base station indicates an instruction for releasing the terminal aggregator transmission to the anchor base station, that is, the non anchor base station sends the TAC release request message. The TAC release request message may be an S-NODE MODIFICATION REQUIRED or another message.

In embodiments, the TAC release request message carries one of the following: a released service identifier, a TAC release reason, an identifier of the released second terminal on the first interface, an identifier of the released second terminal on the second interface, or connection configuration information between the released first communication node and second communication node. The released service identifier may be, for example, a DRB identifier and a PDU session identifier. The TAC release reason may be, for example, poor channel quality, overload, poor sidelink channel configuration, or that UE cannot be found. The identifier of the released second terminal on the first interface refers to an identifier of the released non anchor UE on the Uu interface and includes a DRB identifier and a logical channel identifier. The identifier of the released second terminal on the second interface refers to an identifier of the released non anchor UE on the SideLink and includes a DRB identifier and a logical channel identifier. The connection configuration information between the released first communication node and second communication node refers to the released connection configuration between the non anchor base station and the anchor base station and includes transmission information for uplink and downlink data fronthaul, such as a GTPU identifier and a transport layer address.

In S720, a TAC release confirmation message fed back by the anchor gNB is received.

In embodiments, after receiving the TAC release request message, the anchor base station may choose whether to release the terminal aggregator transmission process based on the preceding information and reply with a corresponding TAC release confirmation message. The TAC release confirmation message may be an S-NODE MODIFICATION CONFIRM or another message.

In embodiments, the TAC release confirmation message carries one of the following: release success indication information of the second terminal on the second interface, release success indication information of the first terminal on the second interface, release success indication information of the second terminal on the first interface, release success indication information of the first terminal on the first interface, a confirmation message fed back by a first terminal to the first communication node, a confirmation message fed back by a second terminal to a first terminal, or a confirmation message fed back by a second terminal to the first communication node. The release success indication information of the second terminal on the second interface refers to the non anchor UE SideLink release success indication. The release success indication information of the first terminal on the second interface refers to the anchor UE SideLink release success indication. The release success indication information of the second terminal on the first interface refers to the non anchor UE Uu release success indication. The release success indication information of the first terminal on the first interface refers to the anchor UE Uu release success indication. The confirmation message fed back by the first terminal to the first communication node refers to the confirmation message fed back by the anchor UE to the anchor base station, for example, an RRCReconfigurationComplete message that may be encapsulated as a container and carried by the TAC release confirmation message. The confirmation message fed back by the second terminal to the first terminal refers to the confirmation message fed back by the non anchor UE to the anchor UE, for example, an RRCReconfigurationCompleteSidelink message that may be encapsulated as a container and carried by the TAC release confirmation message. The confirmation message fed back by the second terminal to the first communication node refers to the confirmation message fed back by the non anchor UE to the anchor base station, for example, an RRCReconfigurationComplete message that may be encapsulated as a container and carried by the TAC release confirmation message.

In an embodiment, the anchor base station and the non anchor base station may initiate a request for the terminal aggregator transmission. However, the opposite-end base station may not be able to perform the terminal aggregator transmission between base stations for some reasons (for example, an insufficient channel state or a heavy load), and the opposite-end base station may reject the request. In embodiments, an example is used where the first communication node is a local base station, and the second communication node is an opposite-end base station to explain the interaction process of TAC rejection between the first communication node and the second communication node. In the case where the local base station is an anchor base station, the opposite-end base station is a non anchor base station; in the case where the local base station is a non anchor base station, the opposite-end base station is an anchor base station. FIG. 8 is a diagram illustrating the interaction of TAC establishment rejection according to an embodiment of the present application. As shown in FIG. 8, this embodiment includes S810 and S820.

In S810, a TAC establishment request message is sent to an opposite-end base station.

In embodiments, the base station initiates a terminal aggregator transmission request to the opposite-end base station, and the message may be S-NODE ADDITION REQUEST, S-NODE MODIFICATION REQUEST, S-NODE MODIFICATION REQUIRED, HANDOVER REQUEST, or another message. For an explanation of the TAC establishment request message, reference is made to the description in the preceding embodiments, and details are not repeated herein.

In S820, a TAC establishment rejection message fed back by the opposite-end base station is received.

In embodiments, in the case where the opposite-end base station cannot perform the TAC due to its own reasons, the opposite-end base station makes a rejection and replies with the TAC establishment rejection message. The TAC establishment rejection message may be S-NODE ADDITION REQUEST REJECT, S-NODE MODIFICATION REQUEST REJECT, S-NODE MODIFICATION REQUIRED, HANDOVER PREPARATION FAILURE, or another message.

The TAC establishment rejection message may carry a TAC release reason, for example, poor channel quality, heavy load, poor SideLink channel, or inability to find UE.

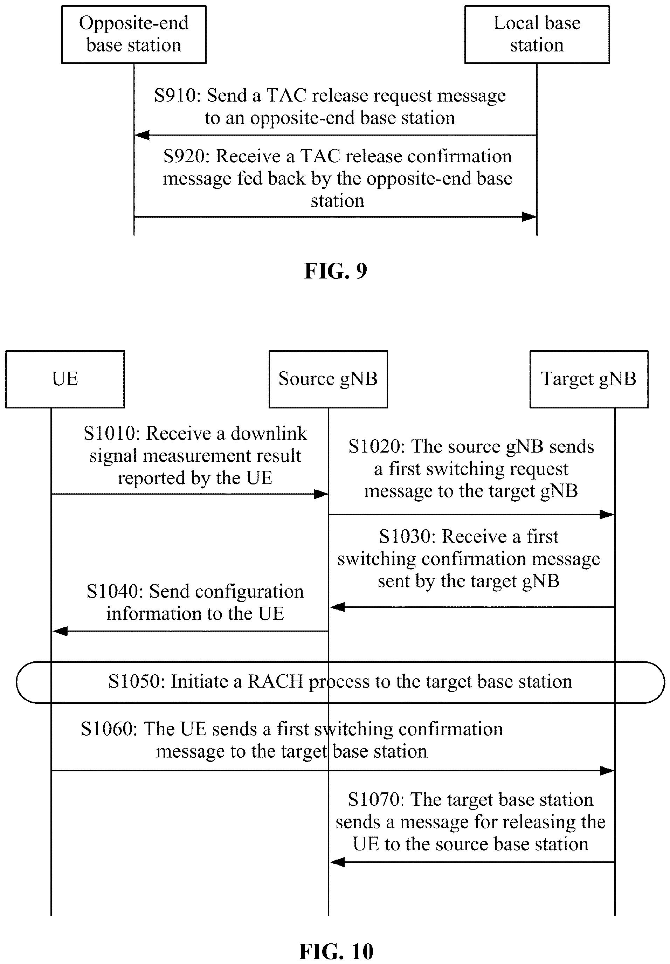

In an embodiment, a UE that performs terminal aggregator transmission needs to end the terminal aggregator transmission for some reasons, such as service completion and channel quality improvement. In this case, the anchor base station and the non anchor base station may initiate a request to end the terminal aggregator transmission. In embodiments, an example is used where the first communication node is a local base station, and the second communication node is an opposite-end base station to explain the interaction process of TAC release between the first communication node and the second communication node. In the case where the local base station is an anchor base station, the opposite-end base station is a non anchor base station; in the case where the local base station is a non anchor base station, the opposite-end base station is an anchor base station. FIG. 9 is a diagram illustrating the interaction of another TAC release according to an embodiment of the present application. As shown in FIG. 9, this embodiment includes S910 and S920.

In S910, a TAC release request message is sent to an opposite-end base station.

In embodiments, the local base station initiates a request for releasing terminal aggregator transmission (that is, the TAC release request message) to the opposite-end base station. The TAC release request message may be S-NODE RELEASE REQUEST, S-NODE RELEASE REQUIRED, or another message.

The TAC release request message may carry one of the following: a release reason, for example, UE channel quality becomes better, load is light, service ends, or UE cannot be found; a released UE identifier, including an identifier of anchor UE and an identifier of non anchor UE; or released connection configuration information between the base stations, which is used for the data packet fronthaul of the terminal aggregator transmission and includes transmission information for uplink and downlink data fronthaul, for example, a GTPU identifier and a transport layer address.

In S920, a TAC release confirmation message fed back by the opposite-end base station is received.

In embodiments, the opposite-end base station replies with a confirmation message (that is, a TAC release confirmation message) to the local base station. The TAC release confirmation message may be S-NODE RELEASE REQUEST ACKNOWLEDGE, S-NODE RELEASE CONFIRM, or another message.

The TAC release confirmation message may include one of the following: connection configuration information between the released base stations, and the connection configuration information between the released base stations is used for the data packet fronthaul of the terminal aggregator transmission and includes transmission information for uplink and downlink data fronthaul, such as a GTPU identifier and a transport layer address.

In an embodiment, a UE is moving, especially when an anchor UE is located at the edge of a cell, the anchor UE may move to the coverage of an another base station. In this case, base station switching may occur, and a service that supports the terminal aggregator transmission also needs to be switched. In embodiments, an example is used where the first communication node is a source base station (denoted as a source gNB), the second communication node is a target base station (denoted as a target gNB), and a third communication node (that is, the first terminal) is anchor UE and non anchor UE, by which the process of the base station switching by the anchor UE is explained. FIG. 10 is a diagram illustrating the interaction of base station switching according to an embodiment of the present application. When both the anchor UE and the non anchor UE access the same base station (that is, the first communication node), if only the anchor UE performs switching, the source base station not only needs to complete a switching process but also changes from the anchor base station to the non anchor base station.

As shown in FIG. 10, this embodiment includes S1010 to S1070.

In S 1010, a downlink signal measurement result reported by the UE is received.

In embodiments, the UE may be an anchor UE or a non anchor UE. In embodiments, the UE reports the downlink signal measurement result to the source gNB. The downlink signal measurement result refers to a measurement result obtained by the UE measuring the downlink signal of the base station, such as RSRP and RSRQ.

In S 1020, the source gNB sends a first switching request message to the target gNB.

In embodiments, the source base station determines, according to the downlink signal measurement result, system load, and the like, to initiate base station switching, that is, the source base station initiates the first switching request message to the target base station. The first switching request message may be a handover request. The first switching request message carries at least one of the following: a TAC identifier bit, a terminal identifier, a service identifier indicating establishment, configuration information of the first communication node for a second interface, the capability of the UE to support terminal aggregator transmission, a connection configuration between the original base station and the target base station, configuration information of the opposite-end UE, or configuration information of the local UE. The TAC identifier bit refers to an identifier bit of the terminal aggregator transmission, where the UE is authorized to indicate the terminal aggregator transmission. The terminal identifier refers to a UE identifier and includes an identifier of the UE, for example, an S-TMSI of the UE, a target identifier, and an original identifier. The service identifier indicating establishment and refers to a service identifier of the terminal aggregator transmission expected to be performed, for example, a DRB identifier and a PDU session identifier. The configuration information of the first communication node for the second interface refers to the configuration information of the source base station for the SideLink and includes a logical channel identifier and a DRB identifier of the sidelink supporting the terminal aggregator transmission, a binding relationship between a sidelink DRB/logical channel of the UE supporting the terminal aggregator transmission and Uu interface DRB/logical channel between the UE and the original base station, where the information may be encapsulated as a container and carried by the first switching request message. The connection configuration between the original base station and the target base station is used for the data packet fronthaul of the terminal aggregator transmission and includes transmission information for uplink and downlink data fronthaul, such as a GTPU identifier and a transport layer address. The configuration information of the opposite-end UE, that is, configuration information of the first communication node for the second terminal, includes configuration of the original base station for the opposite-end UE on the Uu, where the configuration of the original base station for the opposite-end UE on the Uu includes a DRB configuration, a logical channel configuration, a binding relationship between a sidelink DRB/logical channel of the opposite-end UE supporting the terminal aggregator transmission and Uu interface DRB/logical channel between the opposite-end UE and the original base station, where the information may be encapsulated as a container and carried by the first switching request message. The configuration information of the local UE, that is, the configuration information of the first communication node for the first terminal, which includes configuration of the original base station for the UE on the Uu, where the configuration of the original base station for the UE on the Uu includes a DRB configuration, a logical channel configuration, a binding relationship between a sidelink DRB/logical channel of the UE supporting the terminal aggregator transmission and Uu interface DRB/logical channel between the UE and the original base station, where the information may be encapsulated as a container and carried by the first switching request message.

One or more pieces of the preceding information may be encapsulated into a container and transmitted.

In S 1030, a first switching confirmation message sent by the target gNB is received.

In embodiments, the target base station decides to accept the switching according to measurement information, system load, and the like and initiates the first switching confirmation message to the source base station. The message may be HANDOVER REQUEST ACKNOWLEDGE.

In embodiments, the message carries at least one of the following: a terminal aggregator transmission indication, a service identifier indicating successful establishment, a failed service identifier and a failure reason, configuration information of the second communication node for a terminal on the first interface, configuration information of the second communication node for a terminal on the second interface, connection configuration information between the first communication node and the second communication node, or a connection binding relationship between the DRB/PDU session of the target base station supporting the terminal aggregator transmission and the connection between the target base station and the original base station. The terminal aggregator transmission indication indicates the terminal aggregator transmission. The service identifier indicating successful establishment refers to a service identifier for establishing terminal aggregator transmission, such as a DRB identifier and a PDU session identifier. The failed service identifier refers to a service identifier of a failed terminal aggregator transmission, such as a DRB identifier and a PDU session identifier. The failure reason may be, for example, poor channel quality, overloaded, and sidelink configuration failure. The configuration information of the second communication node for the terminal on the first interface refers to the configuration information of the target base station for the UE on the Uu interface and includes a DRB configuration, an RNTI, and a PRACH resource, where the information may be encapsulated as a container and carried by the first switching confirmation message. The configuration information of the second communication node for the terminal on the second interface refers to the configuration of the UE on the SideLink by the target base station and includes a binding relationship between a sidelink DRB/logical channel of the UE supporting the terminal aggregator transmission and Uu interface DRB/logical channel between the UE and the target base station, where the information may be encapsulated as a container and carried by the first switching confirmation message. The connection configuration information between the first communication node and the second communication node refers to the connection configuration between the target base station and the original base station and is used for the data packet fronthaul of the terminal aggregator transmission and includes transmission information for uplink and downlink data fronthaul, such as a GTPU identifier and a transport layer address; The connection binding relationship between the DRB/PDU session of the target base station supporting the terminal aggregator transmission and the connection between the target base station and the original base station may be that, for example, the DRB/PDU session identifier and the GTPU identifier are bound.

One or more pieces of the preceding information may be encapsulated into a container and transmitted.

In S 1040, configuration information is sent to the UE.

In embodiments, after receiving the configuration information of the target base station, the source base station forwards the information to the UE, where the message may be RRC reconfiguration.

In S 1050, a random access channel (RACH) process is initiated to the target base station.

In embodiments, after receiving the configuration information, the UE applies the configuration information to initiate an RACH process to the target base station.

In S 1060, the UE sends a first switching confirmation message to the target base station.

In embodiments, the UE feeds back a first switching confirmation message to the target base station, where the message may be, for example, RRC reconfiguration complete.

In S 1070, the target base station sends a message for releasing the UE to the source base station.

In embodiments, the target base station confirms that the switching process is successful and notifies the source base station to release the UE.

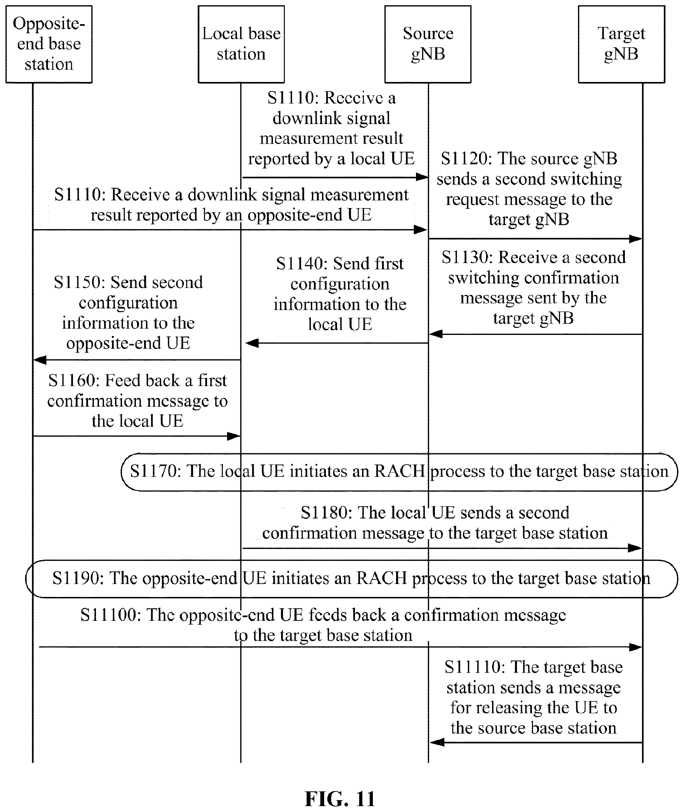

In an embodiment, a UE is moving, and an anchor UE and a non anchor UE may move to the coverage of another base station. In this case, base station switching may occur, and a service that supports the terminal aggregator transmission also needs to be switched. In embodiments, an example is used where the first communication node is a source base station (denoted as a source gNB), the second communication node is a target base station (denoted as a target gNB), a third communication is a local UE, another third communication node is an opposite-end UE, and both the local UE and the opposite-end UE may be either an anchor UE or a non anchor UE, by which the process of the base station switching by the anchor UE and the non anchor UE is explained. FIG. 11 is a diagram illustrating the interaction of another base station switching according to an embodiment of the present application. When both the anchor UE and the non anchor UE access the same base station (that is, the first communication node), and if switching occurs, the anchor UE and the non anchor UE may complete the switching process simultaneously.

As shown in FIG. 11, this embodiment includes S1110 to S11110.

In S 1110, a downlink signal measurement result reported by a local UE and/or an opposite-end UE is received.

In embodiments, the local UE and/or opposite-end UE may be an anchor UE or a non anchor UE. In embodiments, the UE reports a downlink signal measurement result to the source gNB. The downlink signal measurement result refers to a measurement result obtained by the local UE and/or opposite-end UE measuring the downlink signal of the base station, such as RSRP and RSRQ.

In S1120, the source gNB sends a second switching request message to the target gNB.

In embodiments, the source base station determines, according to the downlink signal measurement result, system load, and the like, to initiate the base station switching, that is, the source base station initiates the second switching request message to the target base station. The second switching request message may be, for example, handover request. The second switching request message carries at least one of the following: an identifier of switching UE, and the identifier of switching UE includes identifiers of the local UE and the opposite-end UE (the UEs participating in the terminal aggregator) or identifiers of the anchor UE and the non anchor UE.

In S 1130, a second switching confirmation message sent by the target gNB is received.

In embodiments, the target base station decides to accept the switching according to measurement information, system load, and the like and initiates the second switching confirmation message to the source base station. The message may be HANDOVER REQUEST ACKNOWLEDGE.

In embodiments, the message carries at least one of the following: configuration information of the second communication node for a first terminal on the second interface, configuration information of the second communication node for a second terminal on the second interface, configuration information of the second communication node for a first terminal on the first interface, or configuration information of the second communication node for a second terminal on the first interface. The configuration information of the second communication node for the first terminal on the second interface refers to the configuration of the target base station for the anchor UE on the SideLink and includes a binding relationship between a sidelink DRB/logical channel of the UE supporting the terminal aggregator transmission and Uu interface DRB/logical channel between the UE and the target base station, where the information may be encapsulated as a container and carried by the second switching confirmation message. The configuration information of the second communication node for the second terminal on the second interface refers to the configuration of the target base station for the non anchor UE on the SideLink and includes a binding relationship between a sidelink DRB/logical channel of the UE supporting the terminal aggregator transmission and Uu interface DRB/logical channel between the UE and the target base station, where the information may be encapsulated as a container and carried by the second switching confirmation message. The configuration information of the second communication node for the first terminal on the first interface refers to the configuration of the target base station for the anchor UE on the Uu interface and includes a DRB configuration, an RNTI, and a PRACH resource, where the information may be encapsulated as a container and carried by the second switching confirmation message. The configuration information of the second communication node for a second terminal on the first interface, which refers to the configuration of the target base station for the non anchor UE on the Uu interface and includes a DRB configuration, an RNTI, and a PRACH resource, where the information may be encapsulated as a container and carried by the second switching confirmation message.

One or more pieces of the preceding information may be encapsulated into a container and transmitted. The configuration belonging to the anchor UE may be used as a first container. The configuration belonging to the non anchor UE may be used as a second container.

In S 1140, first configuration information is sent to the local UE.

In embodiments, after receiving the first configuration information of the target base station, the source base station decapsulates the information in the container and sends the information to the local UE. The message may be RRC reconfiguration and may carry a configuration message for the opposite-end UE. The configuration message may be an encapsulated message.

In S 1150, second configuration information is sent to the opposite-end UE.

In embodiments, for example, the local UE decapsulates the information of the encapsulated message and sends the configuration message for the opposite-end UE to the opposite-end UE. The message may be RRC reconfiguration or RRC reconfigurationSidelink.

In S 1160, a first confirmation message is fed back to the local UE.

In embodiments, after receiving the second configuration information, the opposite-end UE feeds back the first confirmation message to the local UE. The first confirmation message may be RRCReconfigurationCompleteSidelink.

In S 1170, the local UE initiates an RACH process to the target base station.

In S 1180, the local UE sends a second confirmation message to the target base station.

In embodiments, the local UE sends the second confirmation message to the target base station. The second confirmation message may be, for example, RRC reconfiguration complete.

In S1190, the opposite-end UE initiates an RACH process to the target base station.

In S11100, the opposite-end UE feeds back a confirmation message to the target base station.

In embodiments, the opposite-end UE feeds back a third confirmation message to the target base station, where the message may be, for example, RRC reconfiguration complete.

In S11110, the target base station sends a message for releasing the UE to the source base station.

In embodiments, the target base station confirms that the switching process is successful and notifies the source base station to release the UE.

One or more operations in S1160 to S11110 in the preceding process may exist or be deleted, and the sequence of the operations is not limited.

In an embodiment, a UE may send, to the base station it assesses, the capability or expectation to support terminal aggregator. In order to facilitate the UE to determine whether the base station supports terminal aggregator, the base station may broadcast, in system information, the capability to support terminal aggregator. In embodiments, in the case where a third communication node is an anchor UE, the first communication node accessed by the third communication node is an anchor gNB. In the case where a third communication node is a non anchor UE, the first communication node accessed by the third communication node is a non anchor gNB.

In embodiments, the system information carries at least one of the following: indication information that a cell supports the TAC, indication information that a cell supports the TAC between base stations, or indication information that a cell supports the TAC within a base station. The indication information that the cell supports the TAC refers to an indication of the cell terminal aggregator transmission, where if the cell supports the terminal aggregator transmission, the cell indicates that the terminal aggregator transmission is supported in the system information. The indication information that the cell supports the TAC between base stations refers to the indication that the cell supports the terminal aggregator transmission between base stations, where if the cell supports the terminal aggregator transmission between base stations, the cell indicates that the terminal aggregator transmission between base stations is supported in the system information. The indication information that the cell supports the TAC within a base station refers to the indication that the cell supports terminal aggregator transmission within the base station, where if the cell supports the terminal aggregator transmission within a base station, the cell indicates that the terminal aggregator transmission within the base station is supported in the system information.

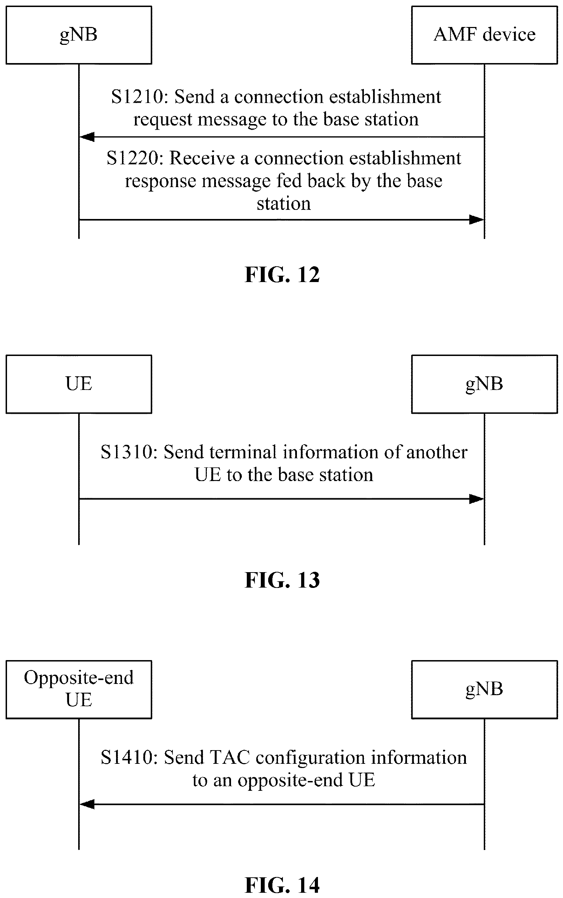

In an embodiment, a fourth communication node is an access and mobility management function (AMF) device, and the first communication node and the second communication node are collectively referred to as base stations. To support the terminal aggregator transmission, the core network in the process of service establishment or UE connection establishment may notify the base station whether the UE supports terminal aggregator transmission so that the base station determines whether to configure the terminal aggregator transmission for the UE. FIG. 12 is a diagram illustrating the interaction of a connection establishment request message according to an embodiment of the present application. As shown in FIG. 12, this embodiment includes S 1210 and S 1220.

In S 1210, a connection establishment request message is sent to the base station.

In embodiments, in the connection establishment request message sent by the core network to the base station for service establishment or UE connection establishment, for example, Initial Context Setup request, PDU Session Resource Setup request, PDU Session Resource Modify request, PDU session resource Modify indication, and ERAB (Evolved Radio Access Bearer) setup request message, at least one of the following is carried: The message carries UEs that may perform terminal aggregator transmission together (for example, non anchor UEs or non-anchor UEs) or may carry identifiers of the cells and the base stations these UEs access.

In S 1220, a connection establishment response message fed back by the base station is received.

In an embodiment, a UE may initiate the establishment of a connection with another UE, for example, the establishment of a WiFi connection and a SideLink connection. The anchor UE or the non anchor UE that establishes the connection is reported to the base station so that the base station is able to support the terminal aggregator function of the UE. In embodiments, an example is used where the first communication node and the second communication node are collectively referred to as base stations, and a third communication node is a UE to describe the interaction process of terminal information of another UE. FIG. 13 is a diagram illustrating the interaction of terminal information according to an embodiment of the present application. As shown in FIG. 13, this embodiment includes S1310.

In S 1310, terminal information of another UE is sent to the base station.

In embodiments, if the UE may support the terminal aggregator transmission, the UE may report the information of another UE, for example, Sidelink UEinformation NR (New Radio), UE Assistance Information, RRC Resume Request, RRC Resume Complete, RRC Setup Request, RRC Setup Complete, RRC Reestablishment Complete, and RRC Reestablishment Request to the base station. The terminal information of the another UE carries one of the following information: indication information indicating that a TAC is expected to be performed, an identifier of a cell or a base station accessed by another third communication node, or the TAC support state of a cell accessed by the another third communication node. The indication information indicating that the TAC is expected to be performed refers to that the terminal aggregator transmission is expected to performed, where if the UE receives instructions from another UE or base station or the core network indicating that the UE is expected to perform terminal aggregator, for example, the UE is expected to perform assisted transmission, the UE may be instructed to be expected to perform the terminal aggregator transmission. The identifier of the cell or the base station accessed by another third communication node refers to an identifier of a cell or a base station the opposite-end UE (anchor UE or non anchor UE) accesses. The TAC support state of the cell accessed by the another third communication node refers to that if the cell accessed by the opposite-end UE is not a serving cell of the UE, whether the cell accessed by the opposite-end UE supports the terminal aggregator transmission is indicated and whether to support the terminal aggregator transmission between stations is indicated.

Here, the another third communication node described herein refers to another UE, that is, the opposite-end UE.

In an embodiment, an example is used where the first communication node and the second communication node are collectively referred to as base stations, the third communication node is a local UE, and another third communication node is an opposite-end UE, by which the interaction process of TAC configuration information is explained. FIG. 14 is a diagram illustrating the interaction of TAC configuration information according to an embodiment of the present application. As shown in FIG. 14, this embodiment includes S1410.

In S1410, TAC configuration information is sent to an opposite-end UE.

In embodiments, when the base station decides to provide the terminal aggregator transmission for a service of the anchor UE by the non anchor UE, the base station needs to provide the TAC configuration information of one of the following: indication to the opposite-end UE an identifier of a cell the opposite-end UE accesses or indication to the opposite-end UE an identifier of a base station the opposite-end UE accesses.

In this embodiment, the anchor UE is the local UE, and the non anchor UE is the opposite-end UE.

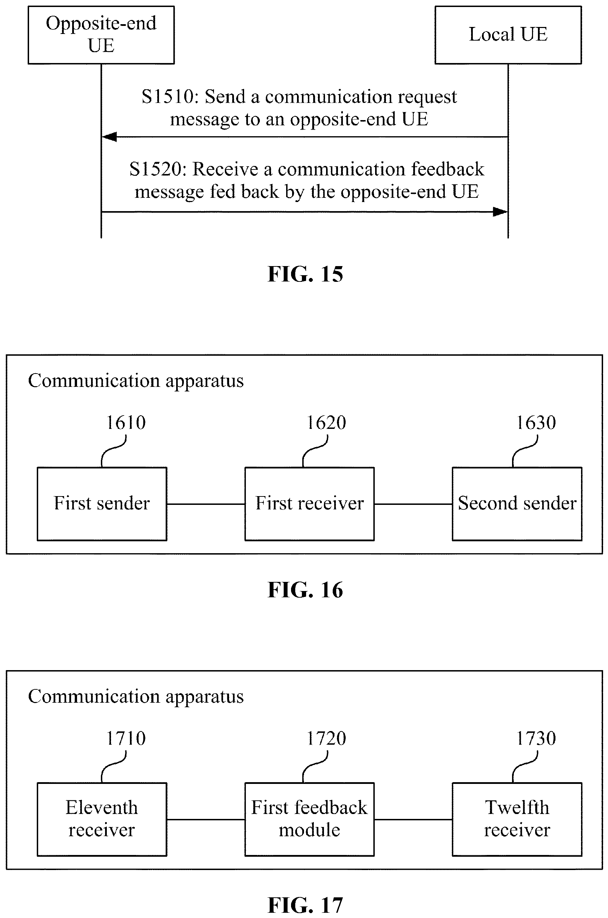

In an embodiment, an example is used where the third communication node is a local UE, and another third communication node is an opposite-end UE, by which the interaction process of a communication request message is explained. FIG. 15 is a diagram illustrating the interaction of a communication request message according to an embodiment of the present application. As shown in FIG. 15, this embodiment includes S1510 and S1520.

In S1510, a communication request message is sent to an opposite-end UE.

In embodiments, when the local UE establishes a connection with the opposite-end UE, a terminal connection established based on terminal aggregator needs to be indicated. If the local UE supports the SideLink connection, the message needs to carry information about the terminal aggregator.

The local UE sends the communication request message, such as Direct Communication Request, Direct link establishment request, and Direct link modification request to the opposite-end UE. The communication request message carries at least one of the following: an identifier of a cell or a base station the local UE accesses; or indication of whether the cell accessed by the opposite-end UE supports the terminal aggregator transmission and the indication of whether the cell accessed by the opposite-end UE supports the terminal aggregator transmission between stations is indicated when the cell accessed by the opposite-end UE is not the serving cell of the local UE.

In S 1520, a communication feedback message fed back by the opposite-end UE is received.

In embodiments, the communication feedback message replied by the opposite-end UE to the local UE may be, for example, Direct Communication Accept, Direct link establishment accept, and Direct link modification request. The communication feedback message carries at least one of the following: an identifier of a cell or a base station the opposite-end UE selects; or the indication of whether the cell accessed by the opposite-end UE supports the terminal aggregator transmission is indicated and the indication of whether to support the terminal aggregator transmission between stations is indicated when the cell accessed by the opposite-end UE is not the serving cell of the local UE.

In an embodiment, FIG. 16 is a block diagram of a communication apparatus according to an embodiment of the present application. This embodiment is applied to a first communication node. As shown in FIG. 16, this embodiment includes a first sender 1610, a first receiver 1620, and a second sender 1630.

The first sender 1610 is configured to send a TAC establishment request message to a second communication node.

The first receiver 1620 is configured to receive a TAC establishment response message corresponding to the TAC establishment request message and fed back by the second communication node.

The second sender 1630 is configured to send a TAC establishment confirmation message carrying a TAC establishment result and corresponding to the TAC establishment response message to the second communication node.

In an embodiment, the TAC establishment request message includes at least one of the following: a first TAC indication configured to indicate that a TAC is expected to be performed, a first terminal identifier and a second terminal identifier, a TAC support state of a second terminal, a service identifier indicating that a TAC is expected to be performed, or connection configuration information between the second communication node and the first communication node.

In an embodiment, the TAC establishment response message includes at least one of the following: a second TAC indication configured to indicate that a TAC is performed, first interface configuration information of the second communication node for a second terminal, or second interface configuration information of the second communication node for a second terminal.

In an embodiment, the TAC establishment confirmation message includes at least one of the following: first interface establishment success indication information of a first terminal, second interface establishment success indication information of a first terminal, first interface establishment success indication information of a second terminal, second interface establishment success indication information of a second terminal, a confirmation message fed back by a first terminal to the first communication node, a confirmation message fed back by a second terminal to the first communication node, or a confirmation message fed back by a second terminal to a first terminal.

In an embodiment, before sending the TAC establishment request message to the second communication node, the communication apparatus applied to the first communication node also includes a second receiver.

The second receiver is configured to receive a TAC indication message sent by the second communication node, where the TAC indication message is configured to indicate that a second terminal under the second communication node expects to perform a TAC.

In an embodiment, the TAC indication message includes at least one of the following: a second terminal identifier, a TAC support state of the second terminal, a first terminal identifier, a downlink signal measurement result of the second terminal for the second communication node, a measurement result of the second terminal for a sidelink signal, or the estimated air interface rate of the second terminal based on the TAC.

In an embodiment, after sending the TAC establishment request message to the second communication node, the communication apparatus applied to the first communication node also includes a third receiver.

The third receiver is configured to receive a TAC establishment rejection message corresponding to the TAC establishment request message and fed back by the second communication node, where the TAC establishment rejection message includes a reject reason.

In an embodiment, the communication apparatus applied to the first communication node also includes a third sender and a fourth receiver.

The third sender is configured to send a TAC release request message to the second communication node.

The fourth receiver is configured to receive a TAC release response message corresponding to the TAC release request message and fed back by the second communication node and/or a TAC release confirmation message carrying a TAC release result and fed back by the second communication node.

In an embodiment, the first communication node is configured to generate a data packet, and the second communication node is configured to forward the data packet generated by the first communication node to a third communication node.

In an embodiment, the first communication node is configured to forward a data packet generated by the second communication node to a third communication node, and the second communication node is configured to generate the data packet.

In an embodiment, the TAC release request message includes at least one of the following: a TAC release reason, a released service identifier, a released terminal identifier, an identifier of a released first terminal on a first interface, an identifier of a released first terminal on a second interface, or connection configuration information between a released first communication node and a released second communication node.

In an embodiment, the TAC release response message includes at least one of the following: a released service identifier, an identifier of a released second communication node for a second terminal on a first interface, an identifier of a released second communication node for a second terminal on a second interface, or connection configuration information between a released first communication node and a released second communication node.

In an embodiment, the TAC release confirmation message includes at least one of the following: release success indication information of a first terminal on a first interface, release success indication information of a first terminal on a second interface, release success indication information of a second terminal on a first interface, release success indication information of a second terminal on a second interface, a confirmation message fed back by a first terminal to the first communication node, a confirmation message fed back by a second terminal to a first terminal, or a confirmation message fed back by a second terminal to the first communication node.

In an embodiment, a first terminal and a second terminal access the first communication node, and the first terminal switches from the first communication node to the second communication node; the communication apparatus applied to the first communication node also includes a fifth receiver, a fourth sender, and a sixth receiver.

The fifth receiver is configured to receive a downlink signal measurement result reported by the first terminal.

The fourth sender is configured to send a first switching request message to the second communication node according to the downlink signal measurement result and the current operating parameter.

The sixth receiver is configured to receive a first switching confirmation message corresponding to the first switching request message and fed back by the second communication node.

In an embodiment, the first switching request message includes at least one of the following: a TAC identifier bit, a terminal identifier, connection configuration information between the first communication node and the second communication node, configuration information of the first communication node for a second interface, configuration information of the first communication node for the second terminal, or configuration information of the first communication node for the first terminal.

In an embodiment, the first switching confirmation message includes at least one of the following: configuration information of the second communication node for a terminal on a first interface, configuration information of the second communication node for a terminal on a second interface, connection configuration information between the first communication node and the second communication node, a DRB of a TAC the second communication node supports or a PDU session of a TAC the second communication node supports, or a connection binding relationship between the first communication node and the second communication node.

In an embodiment, a first terminal and a second terminal access the first communication node, and the first terminal and the second terminal switch from the first communication node to the second communication node simultaneously; the communication apparatus applied to the first communication node also includes a seventh receiver, a fifth sender, and an eighth receiver.

The seventh receiver is configured to receive a downlink signal measurement result reported by the first terminal and/or the second terminal.

The fifth sender is configured to send a second switching request message to the second communication node according to the downlink signal measurement result and the current operating parameter.

The eighth receiver is configured to receive a second switching confirmation message corresponding to the second switching request message and fed back by the second communication node.

In an embodiment, the second switching confirmation message includes at least one of the following: configuration information of the second communication node for the first terminal on a second interface, configuration information of the second communication node for the second terminal on a second interface, configuration information of the second communication node for the first terminal on a first interface, or configuration information of the second communication node for the second terminal on a first interface.

In an embodiment, after being encapsulated into a container, a parameter carried and transmitted by the TAC establishment response message includes at least one of the following: first interface configuration information of the second communication node to a second terminal, second interface configuration information of the second communication node to a second terminal, a confirmation message fed back by a first terminal to the first communication node, a confirmation message fed back by a second terminal to the first communication node, a confirmation message fed back by a second terminal to a first terminal, an identifier of a released second communication node for a second terminal on a first interface, an identifier of a released second communication node for a second terminal on a second interface, connection configuration information between a released first communication node and a released second communication node, configuration information of the first communication node for a second interface, configuration information of the first communication node for a second terminal, configuration information of the first communication node for a first terminal, configuration information of the second communication node for a terminal on a first interface, configuration information of the second communication node for a terminal on a second interface, configuration information of the second communication node for a first terminal on a second interface, configuration information of the second communication node for a second terminal on a second interface, configuration information of the second communication node for a first terminal on a first interface, or configuration information of the second communication node for a second terminal on a first interface.

In an embodiment, the communication apparatus applied to the first communication node also includes a sixth sender.

The sixth sender is configured to send a system information block (SIB) to a third communication node; the SIB includes one of the following: indication information that a cell supports a TAC, indication information that a cell supports a TAC between base stations, or indication information that a cell supports a TAC within a base station.

In an embodiment, before sending the TAC establishment request message to the second communication node, the communication apparatus applied to the first communication node also includes a ninth receiver.

The ninth receiver is configured to receive a connection establishment request message sent by a fourth communication node; the connection establishment request message includes at least one of the following: a terminal that supports a TAC, an identifier of a cell in which a terminal supporting a TAC is located, or a base station identifier corresponding to a terminal that supports a TAC.

In an embodiment, before sending the TAC establishment request message to the second communication node, a tenth receiver is included.

The tenth receiver is configured to receive terminal information sent by a third communication node; the terminal information includes at least one of the following: indication information indicating that a TAC is expected to be performed, an identifier of a cell or a base station accessed by another third communication node, or a TAC support state of a cell accessed by another third communication node.

In an embodiment, the communication apparatus applied to the first communication node also includes a seventh sender.

The seventh sender is configured to send TAC configuration information to another third communication node; the TAC configuration information includes one of the following: an identifier of a cell accessed by the another third communication node or an identifier of a base station accessed by the another third communication node.

In an embodiment, the third communication node receives a communication feedback message corresponding to a communication request message and fed back by the another third communication node, and both the communication request message and the communication feedback message include at least one of the following: a cell identifier or a base station identifier corresponding to the third communication node, or a TAC support state of a cell accessed by the another third communication node.

The communication apparatus provided in this embodiment is configured to perform the communication method applied to a first communication node in the embodiment shown in FIG. 2 and has similar implementation principles and technical effects to those of the preceding embodiments, which are not repeated here.

In an embodiment, FIG. 17 is a block diagram of another communication apparatus according to an embodiment of the present application. The embodiment is applied to a second communication node. As shown in FIG. 17, the communication apparatus of this embodiment includes an eleventh receiver 1710, a first feedback module 1720, and a twelfth receiver 1730.

The eleventh receiver 1710 is configured to receive a TAC establishment request message sent by the first communication node.

The first feedback module 1720 is configured to feed back a TAC establishment response message corresponding to the TAC establishment request message to the first communication node.

The twelfth receiver 1730 is configured to receive a TAC establishment confirmation message carrying a TAC establishment result and corresponding to the TAC establishment response message and sent by the first communication node.

In an embodiment, after receiving the TAC establishment request message sent by the first communication node, a second feedback module is included.

The second feedback module is configured to feed back a TAC establishment rejection message corresponding to the TAC establishment request message to the first communication node, the TAC establishment rejection message includes a reject reason.

In an embodiment, the communication apparatus applied to the second communication node also includes a thirteenth receiver and a third feedback module.

The thirteenth receiver is configured to receive a TAC release request message sent by the first communication node.

The third feedback module is configured to feed back to the first communication node a TAC release response message corresponding to the TAC release request message and/or a TAC release confirmation message carrying a TAC release result.

In an embodiment, a first terminal and a second terminal access the first communication node, and the first terminal switches from the first communication node to the second communication node; the communication apparatus applied to the second communication node also includes a fourteenth receiver and a fourth feedback module.

The fourteenth receiver is configured to receive a first switching request message sent by the first communication node.

The fourth feedback module is configured to feed back a first switching confirmation message corresponding to the first switching request message to the first communication node.

In an embodiment, a first terminal and a second terminal access the first communication node, and the first terminal and the second terminal switch from the first communication node to the second communication node simultaneously; the communication apparatus applied to the second communication node also includes a fifteenth receiver and a fifth feedback module.

The fifteenth receiver is configured to receive a second switching request message sent by the first communication node.

The fifth feedback module is configured to feed back a second switching confirmation message corresponding to the second switching request message to the first communication node.

In an embodiment, the communication apparatus applied to the second communication node also includes an eighth sender.

The eighth sender is configured to send a system information block (SIB) to a third communication node; the SIB includes one of the following: indication information that a cell supports a TAC, indication information that a cell supports a TAC between base stations, or indication information that a cell supports a TAC within a base station.

In an embodiment, before receiving the TAC establishment request message sent by the first communication node, a sixteenth receiver is also included.

The sixteenth receiver is configured to receive a connection establishment request message sent by a fourth communication node; the connection establishment request message includes at least one of the following: a terminal that supports a TAC, an identifier of a cell in which a terminal supporting a TAC is located, or a base station identifier corresponding to a terminal that supports a TAC.

In an embodiment, before receiving the TAC establishment request message sent by the first communication node, the apparatus also includes receiving terminal information sent by a third communication node; the terminal information includes at least one of the following: indication information indicating that a TAC is expected to be performed, an identifier of a cell or a base station accessed by another third communication node, or a TAC support state of a cell accessed by another third communication node.

In an embodiment, the communication apparatus applied to the second communication node also includes a ninth sender.

The ninth sender is configured to send TAC configuration information to another third communication node; the TAC configuration information includes one of the following: an identifier of a cell accessed by the another third communication node or an identifier of a base station accessed by the another third communication node.

In an embodiment, the third communication node receives a communication feedback message corresponding to a communication request message and fed back by the another third communication node, and both the communication request message and the communication feedback message include at least one of the following: a cell identifier or a base station identifier corresponding to the third communication node, or a TAC support state of a cell accessed by the another third communication node.

The communication apparatus provided in this embodiment is configured to implement the communication method of the embodiment shown in FIG. 3 and has a similar implementation principle and technical effect, which will not be described in detail herein.

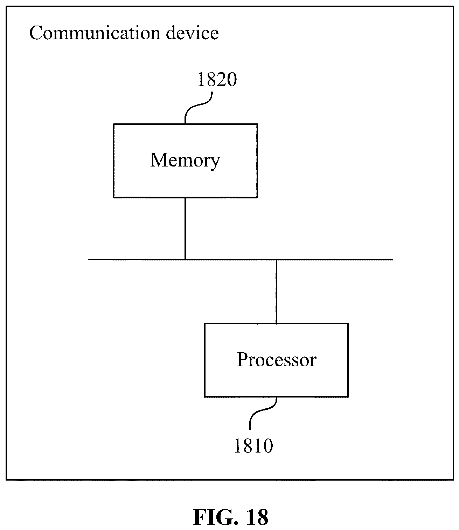

FIG. 18 is a diagram illustrating the structure of a communication device according to an embodiment of the present application. As shown in FIG. 18, the communication device provided in the present application includes a processor 1810 and a memory 1820. One or more processors 1810 may be included in the device. One processor 1810 is shown as an example in FIG. 18. One or more memories 1820 may be provided in the device. One memory 1820 is shown as an example in FIG. 18. The processor 1810 and memory 1820 of the device are connected by a bus or in other manners. The connection by a bus is taken as an example in FIG. 18. In the embodiment, the device may be a first communication node, and the first communication node may be a local base station.

As a computer-readable storage medium, the memory 1820 may be configured to store software programs, computer-executable programs, and modules, such as program instructions/modules (for example, a first sender 1610, a first receiver 1620, and a second sender 1630 in the communication apparatus) corresponding to the device according to any embodiment of the present application. The memory 1820 may include a program storage region and a data storage region. The program storage region may store an operating system and an application program required by at least one function. The data storage region may store data created according to the use of the device. Additionally, the memory 1820 may include a high-speed random-access memory and may also include a nonvolatile memory such as at least one disk memory, flash memory, or another nonvolatile solid-state memory. In some examples, the memory 1820 may also include memories that are remotely disposed relative to the processor 1810, and these remote memories may be connected to the device via a network. Examples of the preceding network include but are not limited to, the Internet, an intranet, a local area network, a mobile communication network, and a combination thereof.

In the case where the communication device is a second communication node, the preceding device may be configured to execute the communication method applied to the second communication node in any one of the preceding embodiments and has corresponding functions and effects.

Embodiments of the present application also provide a storage medium including computer-executable instructions. When executed by a computer processor, the computer-executable instructions perform a communication method applied to a first communication node. The method includes sending a terminal aggregator communication (TAC) establishment request message to a second communication node; receiving a TAC establishment response message corresponding to the TAC establishment request message and fed back by the second communication node; sending a TAC establishment confirmation message carrying a TAC establishment result and corresponding to the TAC establishment response message to the second communication node.

Embodiments of the present application also provide a storage medium including computer-executable instructions. When executed by a computer processor, the computer-executable instructions perform a communication method applied to a second communication node. The method includes receiving a TAC establishment request message sent by the first communication node; feeding back a TAC establishment response message corresponding to the TAC establishment request message to the first communication node; receiving a TAC establishment confirmation message carrying a TAC establishment result and corresponding to the TAC establishment response message and sent by the first communication node.

It is to be understood by those skilled in the art that the term "user equipment" covers any suitable type of wireless user equipment, for example, a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another calculation apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented using any suitable data storage technology such as, but not limited to, a read-only memory (ROM), a random-access memory (RAM), or an optical memory device and system (a digital video disc (DVD), or a compact disc (CD)). Computer-readable media may include non-transitory storage media. The data processor may be of any type suitable for a local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A communication method, applied to a first communication node and comprising:
sending a terminal aggregator communication, TAC, establishment request message to a second communication node;
receiving a TAC establishment response message corresponding to the TAC establishment request message and fed back by the second communication node; and
sending a TAC establishment confirmation message carrying a TAC establishment result and corresponding to the TAC establishment response message to the second communication node.

2. The method of claim 1, wherein the TAC establishment request message comprises at least one of the following: a first TAC indication configured to indicate that a TAC is expected to be performed, a first terminal identifier and a second terminal identifier, a TAC support state of a second terminal, a service identifier indicating that a TAC is expected to be performed, a TAC support capability of a second terminal, or connection configuration information between the second communication node and the first communication node.

3. The method of claim 1, wherein the TAC establishment response message comprises at least one of the following: a second TAC indication configured to indicate that a TAC is performed, first interface configuration information of the second communication node for a second terminal, or second interface configuration information of the second communication node for a second terminal.

4. The method of claim 1, wherein the TAC establishment confirmation message comprises at least one of the following: first interface establishment success indication information of a first terminal, second interface establishment success indication information of a first terminal, first interface establishment success indication information of a second terminal, second interface establishment success indication information of a second terminal, a confirmation message fed back by a first terminal to the first communication node, a confirmation message fed back by a second terminal to the first communication node, or a confirmation message fed back by a second terminal to a first terminal.

5. The method of claim 1, before sending the TAC establishment request message to the second communication node, further comprising:
receiving a TAC indication message sent by the second communication node, wherein the TAC indication message is configured to indicate that a second terminal under the second communication node expects to perform a TAC.

6. The method of claim 5, wherein the TAC indication message comprises at least one of the following: a second terminal identifier, a TAC support state of the second terminal, a first terminal identifier, a downlink signal measurement result of the second terminal for the second communication node, a measurement result of the second terminal for a sidelink signal, or an estimated air interface rate of the second terminal based on the TAC.

7. The method of claim 1, after sending the TAC establishment request message to the second communication node, further comprising:
receiving a TAC establishment rejection message corresponding to the TAC establishment request message and fed back by the second communication node, wherein the TAC establishment rejection message comprises a reject reason.

8. The method of claim 1, further comprising:
sending a TAC release request message to the second communication node; and
receiving at least one of a TAC release response message corresponding to the TAC release request message and fed back by the second communication node or a TAC release confirmation message carrying a TAC release result and fed back by the second communication node.

9. The method of claim 8, wherein the first communication node is configured to generate a data packet, and the second communication node is configured to forward the data packet generated by the first communication node to a third communication node.

10. The method of claim 8, wherein the first communication node is configured to forward a data packet generated by the second communication node to a third communication node, and the second communication node is configured to generate the data packet.

11. The method of any one of claims 8 to 10, wherein the TAC release request message comprises at least one of the following: a TAC release reason, a released service identifier, a released terminal identifier, an identifier of a released first terminal or a released second terminal on a first interface, an identifier of a released first terminal or a released second terminal on a second interface, or connection configuration information between a released first communication node and a released second communication node.

12. The method of any one of claims 8 to 10, wherein the TAC release response message comprises at least one of the following: a released service identifier, an identifier of a released second communication node for a second terminal on a first interface, an identifier of a released second communication node for a second terminal on a second interface, or connection configuration information between a released first communication node and a released second communication node.

13. The method of any one of claims 8 to 10, wherein the TAC release confirmation message comprises at least one of the following: release success indication information of a first terminal on a first interface, release success indication information of a first terminal on a second interface, release success indication information of a second terminal on a first interface, release success indication information of a second terminal on a second interface, a confirmation message fed back by a first terminal to the first communication node, a confirmation message fed back by a second terminal to a first terminal, or a confirmation message fed back by a second terminal to the first communication node.

14. The method of claim 1, wherein a first terminal and a second terminal access the first communication node, and the first terminal switches from the first communication node to the second communication node; and the method further comprises:
receiving a downlink signal measurement result reported by the first terminal;
sending a first switching request message to the second communication node according to the downlink signal measurement result and a current operating parameter; and
receiving a first switching confirmation message corresponding to the first switching request message and fed back by the second communication node.

15. The method of claim 14, wherein the first switching request message comprises at least one of the following: a TAC identifier bit, a terminal identifier, connection configuration information between the first communication node and the second communication node, configuration information of the first communication node for a second interface, configuration information of the first communication node for the second terminal, or configuration information of the first communication node for the first terminal.

16. The method of claim 14, wherein the first switching confirmation message comprises at least one of the following: configuration information of the second communication node for a terminal on a first interface, configuration information of the second communication node for a terminal on a second interface, connection configuration information between the first communication node and the second communication node, a data radio bearer, DRB, of a TAC the second communication node supports or a protocol data unit, PDU, session of a TAC the second communication node supports, or a connection binding relationship between the first communication node and the second communication node.

17. The method of claim 1, wherein a first terminal and a second terminal access the first communication node, and the first terminal and the second terminal switch from the first communication node to the second communication node simultaneously; and the method further comprises:
receiving a downlink signal measurement result reported by at least one of the first terminal or the second terminal;
sending a second switching request message to the second communication node according to the downlink signal measurement result and a current operating parameter; and
receiving a second switching confirmation message corresponding to the second switching request message and fed back by the second communication node.

18. The method of claim 17, wherein the second switching confirmation message comprises at least one of the following: configuration information of the second communication node for the first terminal on a second interface, configuration information of the second communication node for the second terminal on a second interface, configuration information of the second communication node for the first terminal on a first interface, or configuration information of the second communication node for the second terminal on a first interface.

19. The method of claim 1, wherein
after being encapsulated into a container, a parameter carried and transmitted by the TAC establishment response message comprises at least one of the following: first interface configuration information of the second communication node for a second terminal, second interface configuration information of the second communication node for a second terminal, a confirmation message fed back by a first terminal to the first communication node, a confirmation message fed back by a second terminal to the first communication node, a confirmation message fed back by a second terminal to a first terminal, an identifier of a released second communication node for a second terminal on a first interface, an identifier of a released second communication node for a second terminal on a second interface, connection configuration information between a released first communication node and a released second communication node, configuration information of the first communication node for a second interface, configuration information of the first communication node for a second terminal, configuration information of the first communication node for a first terminal, configuration information of the second communication node for a first terminal on a second interface, configuration information of the second communication node for a second terminal on a second interface, configuration information of the second communication node for a first terminal on a first interface, or configuration information of the second communication node for a second terminal on a first interface.

20. The method of claim 1, further comprising:
sending a system information block, SIB, to a third communication node, wherein the SIB comprises one of the following: indication information that a cell supports a TAC, indication information that a cell supports a TAC between base stations, or indication information that a cell supports a TAC within a base station.

21. The method of claim 1, before sending the TAC establishment request message to the second communication node, further comprising:
receiving a connection establishment request message sent by a fourth communication node, wherein the connection establishment request message comprises at least one of the following: a terminal that supports a TAC, an identifier of a cell in which a terminal supporting a TAC is located, or a base station identifier corresponding to a terminal that supports a TAC.

22. The method of claim 1, before sending the TAC establishment request message to the second communication node, further comprising: receiving terminal information sent by a third communication node, wherein the terminal information comprises at least one of the following: indication information indicating that a TAC is expected to be performed, an identifier of a cell or a base station accessed by another third communication node, or a TAC support state of a cell accessed by another third communication node.

23. The method of claim 20, further comprising:
sending TAC configuration information to another third communication node, wherein the TAC configuration information comprises one of the following: an identifier of a cell accessed by the another third communication node or an identifier of a base station accessed by the another third communication node.

24. The method of claim 23, wherein the third communication node receives a communication feedback message corresponding to a communication request message and fed back by the another third communication node, wherein both the communication request message and the communication feedback message comprise at least one of the following: a cell identifier or a base station identifier corresponding to the third communication node, or a TAC support state of a cell accessed by the another third communication node.

25. A communication method, applied to a second communication node and comprising:
receiving a terminal aggregator communication, TAC, establishment request message sent by a first communication node;
feeding back a TAC establishment response message corresponding to the TAC establishment request message to the first communication node; and
receiving a TAC establishment confirmation message carrying a TAC establishment result and corresponding to the TAC establishment response message and sent by the first communication node.

26. The method of claim 25, after receiving the TAC establishment request message sent by the first communication node, further comprising:
feeding back a TAC establishment rejection message corresponding to the TAC establishment request message to the first communication node, wherein the TAC establishment rejection message comprises a reject reason.

27. The method of claim 25, further comprising:
receiving a TAC release request message sent by the first communication node; and
feeding back to the first communication node at least one of a TAC release response message corresponding to the TAC release request message or a TAC release confirmation message carrying a TAC release result.

28. The method of claim 25, wherein a first terminal and a second terminal access the first communication node, and the first terminal switches from the first communication node to the second communication node; and the method further comprises:
receiving a first switching request message sent by the first communication node; and
feeding back a first switching confirmation message corresponding to the first switching request message to the first communication node.

29. The method of claim 25, wherein a first terminal and a second terminal access the first communication node, and the first terminal and the second terminal switch from the first communication node to the second communication node simultaneously; and the method further comprises:
receiving a second switching request message sent by the first communication node; and
feeding back a second switching confirmation message corresponding to the second switching request message to the first communication node.

30. A communication device, comprising a memory and at least one processor, wherein
the memory is configured to store at least one program; and
when executed by the at least one processor, the at least one program causes the at least one processor to perform the method of any one of claims 1 to 24 or claims 25 to 29.

31. A storage medium storing a computer program which, when executed by a processor, performs the method of any one of claims 1 to 24 or 25 to 29.
